# EUROPEAN PATENT APPLICATION

(11) **EP 4 611 390 A1**
(43) Date of publication of application: **03.09.2025**
(21) Application number: 23947333.3
(22) Date of filing: 10.11.2023
(51) Int. Cl.: H04R 1/10

(54) **EARPHONE**

(30) Priority: 28.07.2023 CN 202310956970
(71) Applicant: Shenzhen Shokz Co., Ltd., Shenzhen, Guangdong 518108 (CN)
(72) Inventor: XU, Jiang, Shenzhen, Guangdong 518108 (CN); YAN, Zeteng, Shenzhen, Guangdong 518108 (CN); ZHENG, Zeying, Shenzhen, Guangdong 518108 (CN); ZHANG, Haofeng, Shenzhen, Guangdong 518108 (CN); LI, Yongjian, Shenzhen, Guangdong 518108 (CN); ZHONG, Lei, Shenzhen, Guangdong 518108 (CN); HAN, Ruixin, Shenzhen, Guangdong 518108 (CN); CHEN, Yunbin, Shenzhen, Guangdong 518108 (CN); WANG, Chong, Shenzhen, Guangdong 518108 (CN); ZHAO, Tao, Shenzhen, Guangdong 518108 (CN)
(74) Representative: Wang, Bo
(86) International application number: PCT/CN2023/131097
(87) International publication number: WO 2025/025395

(57) **Abstract**

The present disclosure discloses an earphone (100) comprising a core module (1) and an ear hook (2). The ear hook (2) is provided in a curved shape and includes a first end (201) and a second end (202) away from the first end (201), the first end (201) being connected to the core module (1). The ear hook (2) is configured to hang on an ear of a user, and the ear hook (2) includes an elastic frame (21) and a covering member (22), the elastic frame (21) extending along an extension direction of the ear hook (2), the covering member (22) covering around the elastic frame (21), and the covering member (22) being provided with a buffer cavity (220).

## Description

### TECHNICAL FIELD

The present disclosure relates to the technical field of electronic devices, and in particular, to an earphone.

### BACKGROUND

With the continuous popularization of electronic devices, electronic devices have become an indispensable tool for socializing and entertainment in people's daily lives, and people's requirements for electronic devices are also increasing. Electronic devices such as earphones and smart glasses have also been widely used in people's daily lives, and they can be used in conjunction with cell phones, computers, and other terminal devices to provide users with an auditory feast.

However, the ear hooks of existing earphones are difficult to balance the stability and comfort of wearing, and cannot meet the needs of users.

### SUMMARY

The present disclosure provides an earphone, comprising a core module and an ear hook. The ear hook is provided in a curved shape and includes a first end and a second end away from the first end. The first end is connected to the core module, the ear hook is configured to hang on an ear of a user, the ear hook includes an elastic frame and a covering member, the elastic frame extending along an extension direction of the ear hook, the covering member covering on the elastic frame, and the covering member being provided with a buffer cavity.

In the above-described manner, by providing the ear hook including the elastic frame and the covering member, wherein the elastic frame and the covering member both possess a certain degree of elasticity limit and can undergo elastic deformation within their respective elastic limits, the ear hook can elastically deform to conform to the shape of the ear when the user wears the earphone, thereby effectively improving wearing comfort and stability. The buffer cavity provided in the covering member allows the covering member to undergo elastic deformation more easily when the user wears the earphone, which enables the ear hook to accommodate different ear widths, thereby better conforming to the user's ear and achieving a self-adaptive function. Moreover, due to the presence of the buffer cavity, a contact area between the covering member and the user's ear can be increased when the covering member touches the ear, reducing the pressure exerted by the covering member on the ear and improving the wearing comfort of the user.

In some embodiments, in the first end and the second end, the buffer cavity is closer to the second end.

In some embodiments, the covering member includes a rear covering segment disposed on a rear side of the ear in a wearing state of the earphone, the second end is located at the rear covering segment, and the buffer cavity is opened in the rear covering segment.

In some embodiments, the core module includes a connection end connected to the first end of the ear hook and a free end away from the connection end, at least a portion of the rear covering segment is disposed opposite the free end, and at least a portion of the buffer cavity is located at the portion of the rear covering segment opposite the free end.

In some embodiments, the free end is disposed to extend into a concha cavity of the ear in the wearing state of the earphone, the free end and the rear covering segment jointly clamp an ear region corresponding to the concha cavity from a front side and a rear side of the ear region in the wearing state of the earphone, and the buffer cavity is located at a portion of the rear covering segment for clamping the ear region.

In some embodiments, the core module has a length direction, a width direction, and a thickness direction that are perpendicular to each other, the core module is configured to be stacked on the ear along the thickness direction in the wearing state of the earphone, and an orthographic projection of the buffer cavity on a reference plane perpendicular to the length direction partially overlaps with an orthographic projection of the free end on the reference plane.

In some embodiments, the core module has a length direction, a width direction, and a thickness direction that are perpendicular to each other. The core module is configured to be stacked on the ear along the thickness direction in the wearing state of the earphone, the core module includes an inner side surface facing the ear along the thickness direction and an outer side surface back away from the ear along the thickness direction in the wearing state, and an upper side surface and a lower side surface connecting the inner side surface and the outer side surface, the upper side surface faces the ear hook, the upper side surface and the lower side surface are spaced apart along the width direction. The covering member is divided into a front covering segment and a rear covering segment by an extension plane of the upper side surface, the first end is located at the front covering segment, the second end is located at the rear covering segment, and the buffer cavity is opened in the rear covering segment.

In some embodiments, a dimension of the buffer cavity along the width direction is greater than a dimension of the core module along the width direction.

In some embodiments, the covering member includes a front covering segment and a rear covering segment, the front covering segment covers on the elastic frame, the front covering segment and the rear covering segment are connected along the extension direction, the rear covering segment does not cover on the elastic frame, and the buffer cavity is formed in the rear covering segment.

In some embodiments, the ear hook includes a fixing block. The fixing block is fixedly disposed at one end of the elastic frame close to the second end, the front covering segment covers on the fixing block, and an extension length of the rear covering segment along the extension direction is greater than the extension length of the fixing block along the extension direction.

In some embodiments, a ratio of the extension length of the rear covering segment along the extension direction to an extension length of the front covering segment along the extension direction is greater than or equal to one-fifth and less than or equal to one-half.

In some embodiments, the extension length of the front covering segment along the extension direction is in a range of 50 mm to 70 mm, and the extension length of the rear covering segment is in a range of 10 mm to 30 mm.

In some embodiments, the ear hook further includes a connector, the connector is fixedly disposed at one end of the elastic frame close to the first end, and the connector is inserted into and fixed with the core module.

In some embodiments, the ear hook includes a fixing block, the fixing block is disposed at one end of the elastic frame close to the second end, the covering member covers on the fixing block, and the fixing block is disposed on one side of the buffer cavity away from the core module.

In some embodiments, the fixing block is located between two ends of the buffer cavity along the extension direction of the ear hook and closer to one end of the buffer cavity that is close to the second end.

In some embodiments, the buffer cavity is provided in a closed configuration and formed inside the covering member, or the buffer cavity is configured as a hole or groove.

In some embodiments, the core module has a length direction, a width direction, and a thickness direction that are perpendicular to each other, the core module is configured to be stacked on the ear along the thickness direction in the wearing state of the earphone, and the buffer cavity is configured as a hole and penetrates through the covering member along the thickness direction.

In some embodiments, the buffer cavity is configured as an elongated and curved through-hole, and a curved direction of the buffer cavity matches a curved direction of a portion of the covering member opened with the buffer cavity.

In some embodiments, there are at least two buffer cavities, and the at least two buffer cavities are spaced apart along the extension direction; and/or, the ear hook further includes a filler member, a hardness of the filler member is less than a hardness of the covering member, and the filler member is disposed within the buffer cavity; and/or, the covering member includes an inner side surface facing the core module and an outer side surface back away from the inner side surface, and the inner side surface is disposed closer to the buffer cavity compared to the outer side surface.

In some embodiments, the elastic frame includes a preset radial direction perpendicular to an extension direction of the elastic frame and passing through the buffer cavity; and the buffer cavity is spaced from the elastic frame along the preset radial direction.

In some embodiments, the buffer cavity is closer to the core module along the preset radial direction compared to the elastic frame, such that the buffer cavity is closer to the ear in a wearing state of the earphone.

In some embodiments, the covering member includes a first covering portion and a second covering portion disposed on two sides of the buffer cavity along the preset radial direction; the first covering portion and the second covering portion are spaced apart to form the buffer cavity, the first covering portion is closer to the core module compared to the second covering portion to be configured to contact the ear, and the elastic frame penetrates through the second covering portion.

In some implementations, the elastic frame extends from the first end to the second end.

In some embodiments, the fixing block is fixedly disposed at one end of the elastic frame close to the second end, the fixing block bends and extends from the elastic frame toward the buffer cavity, and continues to bend and extend to above the buffer cavity along an extension direction of the ear hook from the first end to the second end.

In some embodiments, an end of the elastic frame close to the second end is inserted within the fixing block, and a circumferential dimension of one end of the fixing block away from the elastic frame is greater than a circumferential dimension of one end of the fixing block inserted with the elastic frame.

Optionally, the ear hook is opened with a first positioning hole, the fixing block is opened with a second positioning hole, the second positioning hole is located at the end of the fixing block away from the elastic frame, and the first positioning hole and the second positioning hole are disposed opposite to each other.

In some embodiments, the ear hook includes a connector, one end of the elastic frame close to the first end is inserted into the connector, and an extension direction of the end of the elastic frame close to the first end and an extension direction of the connector intersect with each other.

In some embodiments, the core module has a length direction, a width direction, and a thickness direction that are perpendicular to each other, the core module is configured to be stacked on the ear along the thickness direction in a wearing state of the earphone, there is a first angle facing the ear hook between the extension direction of the end of the elastic frame close to the first end and the length direction, there is a second angle facing the ear hook between the extension direction of the connector and the length direction, and the first angle is smaller than the second angle.

In some embodiments, the first angle is in a range of 70° to 110°, and the second angle is in a range of 90° to 130°.

### BRIEF DESCRIPTION OF THE DRAWINGS

In order to more clearly illustrate the technical solutions in the embodiments of the present disclosure, the accompanying drawings that need to be used in the description of the embodiments will be briefly introduced in the following, and it will be obvious that the accompanying drawings in the following description are only some of the embodiments of the present disclosure, and other attachments can be obtained according to them without creative labor to a person of ordinary skill in the art.
FIG. 1 is a schematic diagram illustrating an anterior contour of an ear of a user;
FIG. 2 is a schematic diagram illustrating an overall structure of an earphone according to some embodiments of the present disclosure;
FIG. 3 is a schematic diagram illustrating an exemplary internal structure of an earphone according to some embodiments of the present disclosure;
FIG. 4 is a schematic diagram illustrating an exemplary structure of a first shell of an earphone according to some embodiments of the present disclosure;
FIG. 5 is a schematic diagram illustrating a cross-section along A-A in FIG. 2;
FIG. 6 is a schematic diagram illustrating an exemplary structure of an earphone from one perspective according to some embodiments of the present disclosure;
FIG. 7 is a schematic diagram illustrating an exemplary structure of a charging case used in conjunction with an earphone according to some embodiments of the present disclosure;
FIG. 8 is a schematic diagram illustrating an exemplary three-dimensional structure of an earphone according to some embodiments of the present disclosure;
FIG. 9 is a schematic diagram illustrating the earphone shown in FIG. 8 from a side perspective;
FIG. 10 is a schematic diagram illustrating the earphone shown in FIG. 8 from a top perspective;
FIG. 11a is a schematic diagram illustrating an exemplary structure of an ear hook, as shown in FIG. 8;
FIG. 11b is a schematic diagram illustrating another exemplary structure of an ear hook as shown in FIG. 8;
FIG. 12 is a schematic diagram illustrating an exemplary structure of an elastic frame as shown in FIG. 8;
FIG. 13 is a schematic diagram illustrating another three-dimensional structure of an earphone according to some embodiments of the present disclosure;
FIG. 14 is a schematic diagram illustrating another three-dimensional structure of an earphone according to some embodiments of the present disclosure;
FIG. 15a is a schematic diagram illustrating an exemplary cross-sectional structure of an earphone shown in FIG. 10 along V-V;
FIG. 15b is a schematic diagram illustrating another exemplary cross-sectional structure of an earphone as shown in FIG. 10 along V-V;
FIG. 16 is a schematic diagram illustrating an exemplary three-dimensional structure of an earphone according to some embodiments of the present disclosure;
FIG. 17 is a schematic diagram illustrating a cross-section as shown in FIG. 16 along P-P;
FIG. 18 is a schematic diagram illustrating another three-dimensional structure of an earphone according to some embodiments of the present disclosure;
FIG. 19 is a schematic diagram illustrating a side surface of an earphone shown in FIG. 18;
FIG. 20 is a schematic diagram illustrating another three-dimensional structure of an earphone according to some embodiments of the present disclosure;
FIG. 21 is a schematic diagram illustrating a three-dimensional structure of an earphone according to some embodiments of the present disclosure;
FIG. 22 is a schematic diagram illustrating an exemplary structure of an earphone shown in FIG. 21 from a top perspective;
FIG. 23 is a schematic diagram illustrating an exemplary structure of an ear hook shown in FIG. 21 from a side perspective;
FIG. 24 is a schematic diagram illustrating an exemplary assembly structure of an elastic frame, a fixing block, and a connector of an earphone according to some embodiments of the present disclosure;
FIG. 25 is a schematic diagram illustrating a three-dimensional structure of an ear hook shown in FIG. 21;
FIG. 26 is a schematic diagram illustrating an earphone from a top perspective according to another embodiment of the present disclosure;
FIG. 27 is a schematic diagram illustrating an exemplary circuit structure of an electronic device according to some embodiments of the present disclosure;
FIG. 28 is a schematic diagram illustrating an exemplary circuit structure of an interface circuit according to some embodiments of the present disclosure; and
FIG. 29 is a schematic diagram illustrating another structure of an interface circuit according to some embodiments of the present disclosure.

### DETAILED DESCRIPTION

The present disclosure is described in further detail below in conjunction with the accompanying drawings and embodiments. In particular, it is noted that the following embodiments are only used to illustrate the present disclosure, but do not limit the scope of the present disclosure. Similarly, the following embodiments are only part of the embodiments of the present disclosure rather than all of the embodiments, and all the other embodiments obtained by a person of ordinary skill in the art without creative labor fall within the scope of the protection of the present disclosure.

References to "embodiments" in the present disclosure imply that particular features, structures, or characteristics described in conjunction with embodiments may be included in at least one embodiment of the present disclosure. It is understood by those of skill in the art, both explicitly and implicitly, that the embodiments described in the present disclosure may be combined with other embodiments.

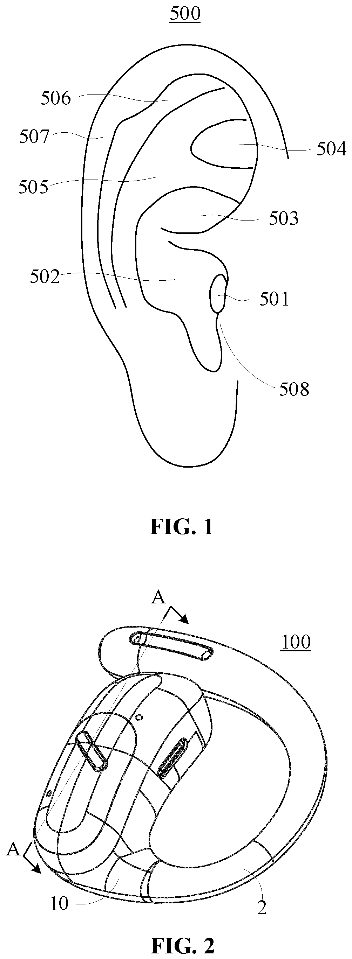

Referring to FIG. 1, an ear 500 of a user may include physiological parts such as an external ear canal 501, a cavum concha 502, a cymba concha 503, a triangular fossa 504, an antihelix 505, a scapha 506, a helix 507, and an antitragus 508. Although the external ear canal 501 has a certain depth and extends to a tympanic membrane of the ear, for ease of description and Referring to FIG. 1, when not otherwise specified in the present disclosure, the external ear canal 501 specifically refers to an entrance (i.e., an ear hole) of the external ear canal 501 away from the tympanic membrane. Furthermore, the physiological parts, such as the cavum concha 502, the cymba concha 503, the triangular fossa 504, etc., have a certain volume and a certain depth. The cavum concha 502 is in direct connection with the external ear canal 501, which means that the ear hole can be simply regarded as being located at a bottom of the cavum concha 502.

Furthermore, different users may have individual differences, resulting in different shapes, sizes, and other dimensional differences of the ear. For ease of description and to minimize (or even eliminate) individual differences among users, a simulator with a head and its (left and right) ears can be produced based on the ANSI: S3.36, S3.25 and IEC: 60318-7 standards, e.g., GRAS 45BC KEMAR. Thus, in the present disclosure, such as "a user wears an earphone 100", "an earphone 100 is in a wearing state", and "in a wearing state" refer to the earphone 100 described in the present disclosure being worn on the ear of the simulator. It should be appreciated that it is precisely due to the individual differences of different users, the earphone 100, when worn by various users, may differ to some extent from the earphone 100 when worn on the ear of the simulator, but such differences should be tolerated.

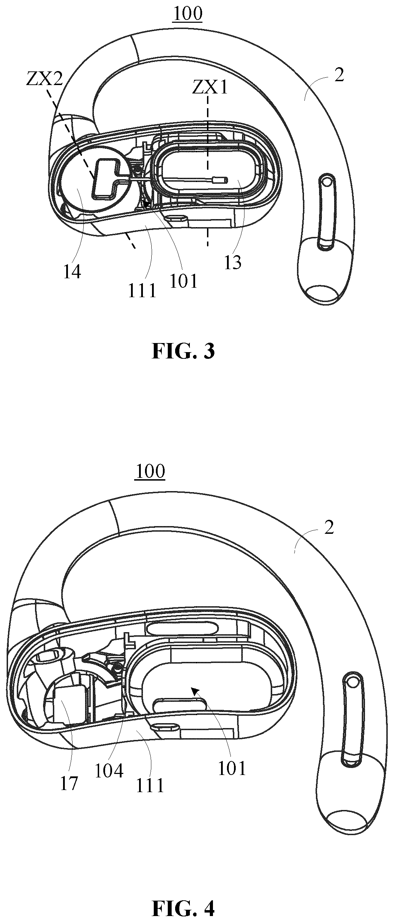

Referring to FIG. 2 to FIG. 5, the earphone 100 may include a core module 1 and an ear hook 2, and the core module 1 may include a shell assembly 10 and a loudspeaker 13. The core module 1 may further include a battery 14. The ear hook 2 may be in the shape of a hook, and the earphone 100 may be worn on the ear of the user through the ear hook 2. The ear hook 2 may be connected to the shell assembly 10. In a wearing state, the shell assembly 10 is located on the front side of the ear, and at least a portion of the ear hook 2 is located at the rear side of the user's ear, allowing the earphone 100 to hang on the ear. Additionally, the shell assembly 10 may be used to form an accommodation space 101. The loudspeaker 13 may be accommodated in the accommodation space 101 for providing air-conducted sound to the external ear canal of the user's ear. The battery 14 may also be accommodated in the accommodation space 101.

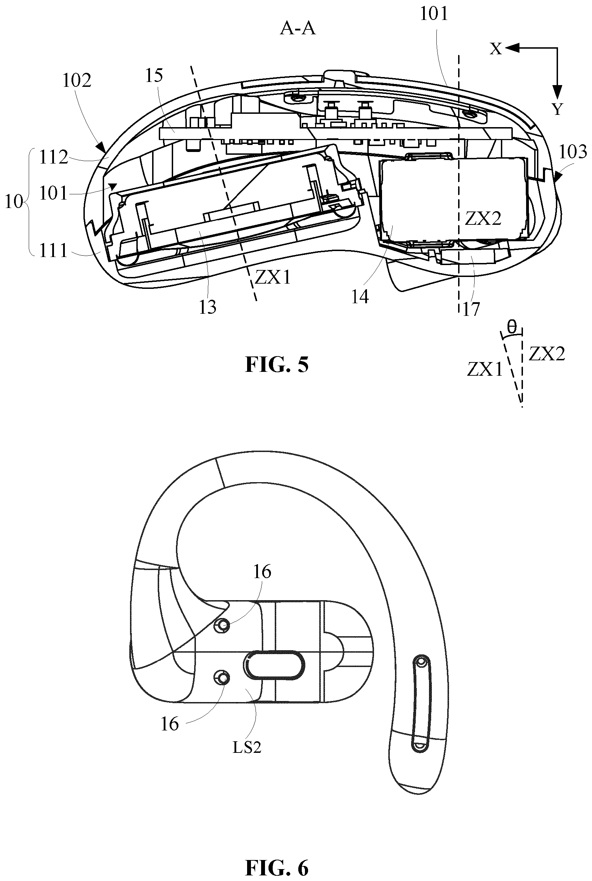

For ease of describing the shape of the shell assembly 10, the present disclosure defines the shell assembly 10 as having a first direction X and a second direction Y, with the first direction X being orthogonal to the second direction Y (refer to FIG. 5). The first direction X refers to a length direction of the shell assembly 10, and the second direction Y refers to a thickness direction of the shell assembly 10.

The shell assembly 10 is stacked on a front side of an ear of a user along the second direction Y. The shell assembly 10 further includes a first end 102 and a second end 103 disposed opposite each other along the first direction X. The first end 102 refers to a portion that faces the cavum concha 502 of the user during wearing, and the second end 103 refers to a portion that is further away from the cavum concha 502 of the user relative to the first end 102. The second end 103 may be connected to the ear hook 2, which may be referred to as the connection end 103 in the later context, and the first end 102 may also be referred to as the free end 102 in the later context.

At least a portion of the first end 102 of the shell assembly 10 extends into the cavum concha 502 of the user's ear and enables the external ear canal of the user's ear to be in an open state. The user's external ear canal being in an open state refers to that the shell assembly 10 does not completely block the external ear canal. Due to the individual differences between different users, when the earphone 100 is worn by different users, the shell assembly 10 may partially cover the external ear canal, but the external ear canal is still not completely blocked.

In summary, when the user wears the earphone 100, the ear hook 2 is placed on the user's ear and partially positioned behind the ear, the shell assembly 10 is located in the front side of the ear, and the first end 102 of the shell assembly 10 may extend into the user's cavum concha 502. In addition, the ear hook 2 may be connected to the second end 103 of the shell assembly 10 or be connected to a portion of the shell assembly 10 that is close to the second end 103. Due to the limitation of the shape of the ear, the shape of the ear hook 2, and the mounting position of the first end 102 of the shell assembly 10, the second end 103 of the shell assembly 10 is typically located in front of, above, or front-above the first end 102 during use.

Optionally, the battery 14 may supply power to the loudspeaker 13. Optionally, in the wearing state, the first end 102 is closer to the cavum concha 502 of the user's ear as compared to the second end 103, and the loudspeaker 13 is closer to the first end 102 and the battery 14 is closer to the second end 103. In this case, it is more favorable for the loudspeaker 13 to emit an air-conducted sound to the user's external ear canal.

Optionally, the loudspeaker 13 and the battery 14 are spaced apart along the first direction X in the accommodation space 101. In this case, the loudspeaker 13 and the battery 14 may be assembled in the shell assembly 10 at the same time, which in turn can improve assembly efficiency and reduce the use of leads.

Optionally, the shell assembly 10 may include a partition wall 104 configured to space the loudspeaker 13 and the battery 14 apart. In this case, the partition wall 104 may separate the battery 14 from the loudspeaker 13, reducing the likelihood of contamination of the battery 14 by water vapor in the loudspeaker 13.

Optionally, referring to FIG. 5, the loudspeaker 13 includes a first axis ZX1. The battery 14 includes a second axis ZX2. The first axis ZX1 and the second axis ZX2 each have a positive direction pointing toward the ear of the user in the wearing state. On a reference plane defined by the first direction X and the second direction Y, a projection of the positive direction of the first axis ZX1 and a projection of the positive direction of the second axis ZX2 on the reference plane are configured to intersect. The first axis ZX1 may be parallel to a vibration direction of a vibration diaphragm of the loudspeaker 13 and passes through the center of gravity of the loudspeaker 13, the geometric center of an end surface of the loudspeaker 13 (e.g., circular end surface, runway shaped end surface), or the axis of the centroid of the loudspeaker 13. The second axis ZX2 refers to an axis passing through the axis of symmetry of the battery 14, the geometric centers of two end surfaces of the battery 14, or the axis of centroid of the battery 14.

In this case, the loudspeaker 13 and the battery 14 are tilted relative to each other, which is conducive to reducing the length of the shell assembly 10 along the first direction X as compared to arranging the loudspeaker 13 and the battery 14 side-by-side, which in turn enables the shell assembly 10 to be stably supported and can also extend into the cavum concha 502.

Optionally, an intersection angle θ between the projection of the positive direction of the first axis ZX1 and the projection of the positive direction of the second axis ZX2 on the reference plane is an acute angle. Optionally, the intersection angle θ between the projection of the positive direction of the first axis ZX1 and the projection of the positive direction of the second axis ZX2 on the reference plane is located on one side of the shell assembly 10 facing the user's ear. Optionally, the intersection angle θ between the projection of the positive direction of the first axis ZX1 and the projection of the positive direction of the second axis ZX2 on the reference plane is in a range of 10° to 14° or a range of 11° to 14°.

In this case, an inclination degree of the loudspeaker 13 with respect to the battery 14 is relatively large, and a projection length of the loudspeaker 13 along the first direction X may gradually decrease, which in turn reduces the length of the shell assembly 10 along the first direction X.

Optionally, on the reference plane, a radial dimension of the loudspeaker 13 is larger than a radial dimension of the battery 14, the second direction Y has a positive direction pointing toward the ear of the user, and an intersection angle θ between the projection of the positive direction of the first axis ZX1 on the reference plane and the positive direction of the second direction Y is larger than an intersection angle θ between the projection of the positive direction of the second axis ZX2 on the reference plane and the positive direction of the second direction Y. Optionally, the second axis ZX2 is parallel to the second direction Y. The radial dimension of the loudspeaker 13 refers to a length of a cross section of the loudspeaker 13 on the reference plane in a direction perpendicular to its first axis ZX1. The radial dimension of the battery 14 refers to a length of the cross section of the battery 14 on the reference plane in a direction perpendicular to its second axis ZX2.

In this case, since the radial dimension of the loudspeaker 13 is greater than the radial dimension of the battery 14, when the loudspeaker 13 is inclined relative to the second direction Y, the degree of change of the projection length of the loudspeaker 13 along the first direction X may be greater compared to the battery 14 inclined relative to the second direction Y, which is thus more conducive to reducing the length of the shell assembly 10 along the first direction X. In addition, the loudspeaker 13 is inclined relative to the battery 14, so that while the second end 103 (which is provided with the battery 14) of the loudspeaker 13 is adhered to the skin in front of the tragus 508 of the user, the vibration diaphragm of the loudspeaker 13 may be oriented generally towards the user's external ear canal, which in turn facilitates the propagation of the sound of the loudspeaker 13 to point to the user's external ear canal.

Optionally, the earphone 100 further includes a circuit board 15 disposed within the accommodation space 101. The circuit board 15 controls the loudspeaker 13 to vibrate to generate sound when powered by the battery 14. Moreover, the circuit board 15 may include a radio frequency module for communication connection with a mobile terminal.

Optionally, the circuit board 15 is provided in the shell assembly 10 and is located on a side of the loudspeaker 13 and the battery 14 away from the user's ear, and a projection of the circuit board 15 along the second direction Y overlaps the loudspeaker 13 and the battery 14. The projection of the circuit board 15 overlapping the loudspeaker 13 and the battery 14 may be partially overlapping or completely overlapping. In this case, the loudspeaker 13 may be disposed on a side close to the user's ear, which is favorable for transmitting sound to the user's ear.

Specifically, the shell assembly 10 includes a first shell 111 and a second shell 112 that fit with each other along the second direction Y. The first shell 111 is disposed on a side of the second shell 112 that is away from the user's ear. The loudspeaker 13 and the battery 14 may be fixed to the first shell 111, the first shell 111 is closer to the user's ear in the wearing state as compared to the second shell 112, and the circuit board 15 is fixed to the second shell 112. In this case, such an arrangement can facilitate the assembly of the earphone 100 and facilitate the disassembly and repair of the earphone 100. Optionally, the circuit board 15 is fixed to the second shell 112 of the shell assembly 10 by heat fusing.

Referring to FIG. 6, optionally, the earphone 100 further includes a charging interface 16 disposed on the first shell 111 and a magnetic suction element 17 disposed between the battery 14 and the first shell 111 along the second axis ZX2. In this case, the earphone 100 may be used with a charging case having a magnetic suction charging function. The charging interface 16 may penetrate through an outer wall surface LS2 of the first shell 111 and be exposed through the outer wall surface LS2 for contact charging.

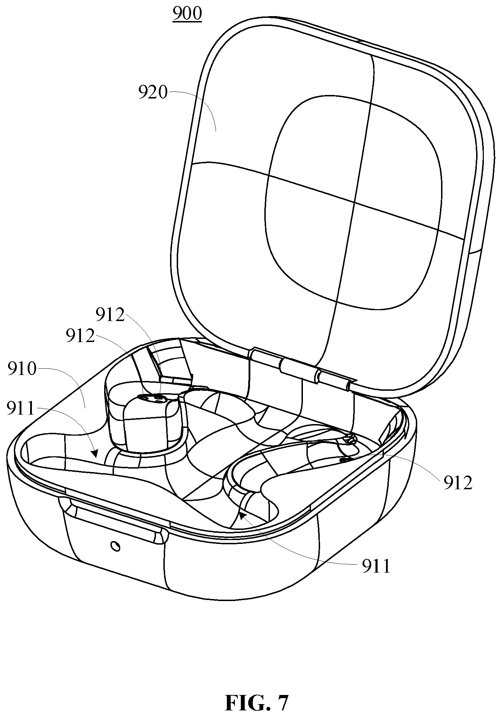

Referring to FIG. 7, a charging case 900 includes a lower shell assembly 910 and an upper shell assembly 920. The lower shell assembly 910 may be provided with two profiling recesses 911, each for accommodating the earphone 100. The upper shell assembly 920 may be capped over the lower shell assembly 910 to close the profiling recesses 911.

Further, the charging case 900 may include a main control circuit board disposed within the lower shell assembly 910 and an electrode terminal 912 disposed on the main control circuit board. A plurality of sets of electrode terminals 912 may be provided, such as two sets of electrode terminals 912, as desired. Correspondingly, when any earphone 100 is placed into the charging case 900, the charging interface 16 in the earphone 100 may contact the electrode terminals 912 in the charging case 900 one-to-one to satisfy the functions of charging, detection, etc. Correspondingly, the electrode terminal 912 may include a positive terminal for power supply and a negative terminal for power supply, and may further include a detection terminal. The three terminals may be connected in pairs to form a triangle, such as an equilateral triangle, or they may be arranged in a spaced manner along a straight line, for example, the three terminals may be spaced apart and colinear.

Optionally, the electrode terminal 912 may be exposed on the profiling recess 911. When the earphone 100 is accommodated in the profiling recess 911, the charging interface 16 may be electrically connected to the electrode terminal 912.

In addition, the charging case 900 may include a magnetic suction structure (not shown in the figures) disposed within the lower shell assembly 910. A plurality of sets of magnetic suction structures may be provided, such as two sets of magnetic suction structures, as desired. After any earphone 100 is placed into the profiling recess 911, the magnetic suction structure and the magnetic suction element 17 in the earphone 100 may form a magnetic suction pairing to make the charging interface 16 contact with the electrode terminal 912 one-to-one.

Several exemplary structures of the ear hook 2 of the earphone 100 are illustrated below, and different exemplary structures may also be combined to obtain other exemplary structures belonging to the present disclosure that are not described in detail.

To enhance the wearing comfort of ear hook 2, a first exemplary structure of the ear hook 2 is illustrated below in the following example.

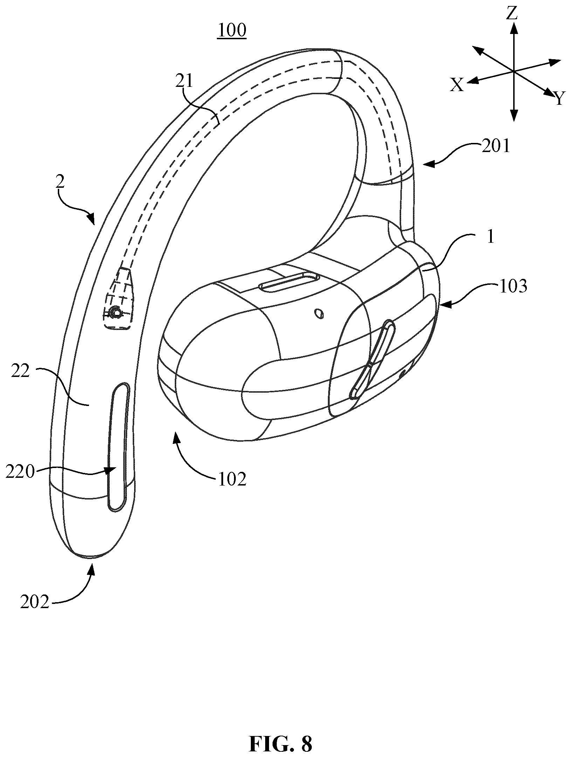

As shown in FIG. 8, the earphone 100 may include the core module 1 and the ear hook 2. The ear hook 2 is provided in a curved shape and includes the first end 201 and the second end 202 away from the first end 201, and the first end 201 is connected to the core module 1. The ear hook 2 is configured to hang on an ear of a user, the ear hook 2 includes an elastic frame 21 and a covering member 22, the elastic frame 21 extends along an extension direction of the ear hook 2, the covering member 22 covers on the elastic frame 21, and the covering member 22 is provided with a buffer cavity 220.

By providing the ear hook 2 including the elastic frame 21 and the covering member 22, wherein the elastic frame 21 and the covering member 22 both possess a certain degree of elasticity limit and can undergo elastic deformation within their respective elastic limits, the ear hook 2 can elastically deform to conform to the shape of the ear when the user wears the earphone 100, thereby effectively enhancing the comfort and stability of wearing the earphone 100. By providing the buffer cavity 220 in the covering member 22 can realize that the covering member 22 is more likely to undergo elastic deformation when the user wears the earphone 100, and can adapt to a different width of the ear to better fit the user's ear, thus realizing a self-adaptive function. Moreover, due to the presence of the buffer cavity 220, the contact area between the covering member 22 and the user's ear can be increased when the covering member 22 contacts the ear, reducing the pressure exerted by the covering member 22 on the ear, and improving the wearing comfort of the user.

Further, as shown in FIG. 8, between the first end 201 and the second end 202, the buffer cavity 220 is closer to the second end 202.

The second end 202 is farther away from the core module 1 than the first end 201, and disposing the buffer cavity 220 closer to the second end 202 realizes that a portion close to the second end 202 is more susceptible to elastic deformation than a portion close to the first end 201 when the user wears the earphone 100, which improves the adaptability of the ear hook 2 while ensuring the stability of the connection between the core module 1 and the ear hook 2, and effectively improving the wearing comfort of the user.

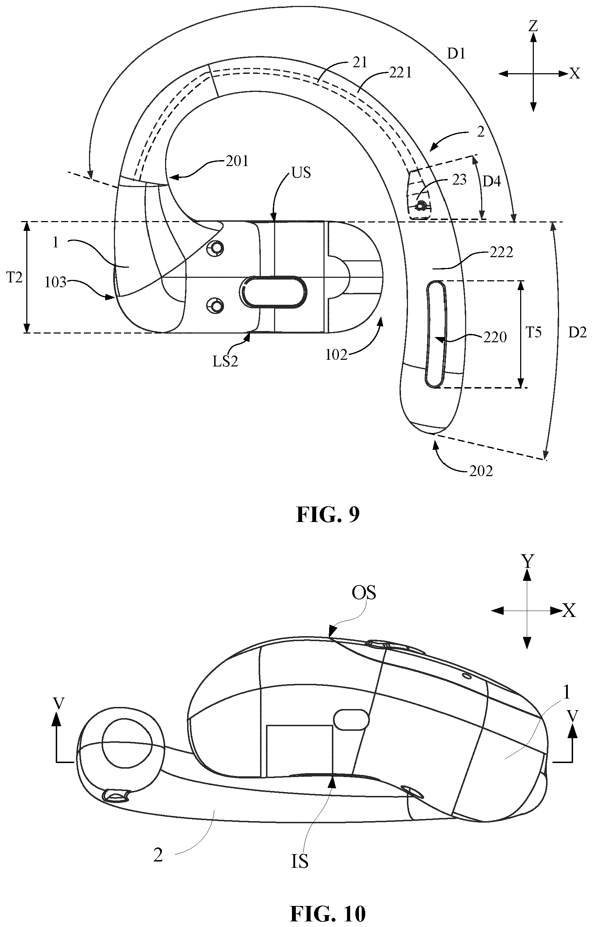

Further, as shown in FIG. 9, the covering member 22 includes a rear covering segment 222 disposed on a rear side of the ear in a wearing state, the second end 202 is located at the rear covering segment 222, and the buffer cavity 220 is opened in the rear covering segment 222.

In the wearing state of the earphone 100, the ear hook 2 hangs around the periphery of the ear on the user's ear. The rear covering segment 222 is disposed on the rear side of the ear, and the buffer cavity 220 is opened in the rear covering segment 222 to enhance the deformation range of the rear covering segment 222 to better adapt to the use of users with different ear widths, effectively reducing the pressure exerted by the ear hook 2 on the rear side of the user's ear, and providing the user with a better wearing experience.

Optionally, as shown in FIG. 9, the core module 1 includes the connection end 103 connected to the first end 201 of the ear hook 2 and the free end 102 away from the connection end 103, at least a portion of the rear covering segment 222 is disposed opposite the free end 102, and at least a portion of the buffer cavity 220 is located at a portion of the rear covering segment 222 disposed opposite the free end 102.

At least a portion of the rear covering segment 222 being disposed opposite the free end 102 and at least a portion of the buffer cavity 220 being located at the portion of the rear covering segment 222 disposed opposite the free end 102 realize that when the user wears the earphone 100, the rear covering segment 222 and the free end 102 are located on two sides of the ear, respectively, and the rear covering segment 222 located on the rear side of the ear can adaptively undergo elastic deformation to effectively reduce the pressure exerted on the user's ear during wearing, thereby enhancing the wearing comfort for the user.

Further, as shown in FIG. 8 and FIG. 9, the free end 102 extends into the cavum concha 502 of the ear in the wearing state, and the free end 102 and the rear covering segment 222 jointly clamp an ear region corresponding to the cavum concha 502 from a front side and a rear side of the ear region in the wearing state, and the buffer cavity 220 is located at the rear covering segment 222 for clamping a portion of the ear region.

In the wearing state, the free end 102 of the earphone 100 extends into the cavum concha 502 to realize that the rear covering segment 222 and the free end 102 jointly clamp the ear of the user from the front side and the rear side when the user wears the earphone 100, thereby increasing the stability of wearing and reducing the possibility of the earphone 100 falling off. The portion of the rear covering segment 222 for clamping the ear region refers to a portion that exerts relatively large pressure on the user's ear. Providing the buffer cavity 220 in this portion can slow down the pressure exerted by the rear covering segment 222 on the ear, improving the user's wearing experience.

Optionally, as shown in FIG. 8 and FIG. 9, the core module 1 has a length direction X, a width direction Z, and a thickness direction Y that are perpendicular to each other, and the core module 1 is used to be stacked on the ear along the thickness direction Y in the wearing state. An orthographic projection of the buffer cavity 220 on a reference plane perpendicular to the length direction X partially overlaps with an orthographic projection of the free end 102 on the reference plane.

The buffer cavity 220 is disposed such that the orthographic projection of the buffer cavity 220 on the reference plane perpendicular to the length direction X partially overlaps with the orthographic projection of the free end 102 on the reference plane, i.e., the free end 102 and at least a portion of the rear covering segment 222 where the buffer cavity 220 is located clamp on two sides of the ear, thereby not exerting excessive pressure when clamping the user's ear, ensuring the fit while enhancing the comfort.

Optionally, as shown in FIG. 9 and FIG. 10, in the wearing state, the core module 1 includes an inner side surface IS facing toward the ear along the thickness direction Y, an outer side surface OS back away from the ear, and an upper side surface US and a lower side surface LS2 connecting the inner side surface IS and the outer side surface OS. The upper side surface US faces the ear hook 2, and the upper side surface US and the lower side surface LS2 are spaced apart along the width direction Z. The covering member 22 is divided into a front covering segment 221 and the rear covering segment 222 by an extension plane of the upper side surface US, with the first end 201 located at the front covering segment 221 and the second end 202 located at the rear covering segment 222, and the buffer cavity 220 is opened in the rear covering segment 222.

The ear hook 2 is provided in a curved shape and around the core module 1 to locate and fix the core module 1 relative to the user's ear when the user wears the earphone 100. Since each user's ear is of different sizes and widths, and the rear covering segment 222, which is opposite to the free end 102, has a larger deformable range due to the buffer cavity 220, so that it can better fit the user's ear when clamping the user's ear, improve the contact area between the rear covering segment 222 and the ear, and can not exert excessive pressure that causes discomfort to the user, effectively improving the user's sense of use.

Further, as shown in FIG. 9, a dimension T5 of the buffer cavity 220 along the width direction Z is larger than a dimension T2 of the core module 1 along the width direction Z.

By setting the dimension T5 of the buffer cavity 220 along the width direction Z being larger than the dimension T2 of the core module 1 along the width direction Z, the buffer cavity 220 can have a sufficient deformation space to make the rear covering segment 222 susceptible to deformation, and the rear covering segment can better fit the structure of the ear when clamping the ear, and it is more convenient for the user to adjust the wearing.

Optionally, as shown in FIG. 9, the covering member 22 includes the front covering segment 221 and the rear covering segment 222, the front covering segment 221 covers on the elastic frame 21, the front covering segment 221 and the rear covering segment 222 are connected along an extension direction, the rear covering segment 222 does not cover the elastic frame 21, and the buffer cavity 220 is formed in the rear covering segment 222.

The hardness of the elastic frame 21 may be greater than the hardness of the covering member 22, so that the elastic frame 21 can support and maintain the relative shape of the ear hook 2. By covering the front covering segment 221 around the elastic frame 21, the user's ear is not in direct contact with the elastic frame 21, which protects the user's ear while maintaining the relative shape of the ear hook 2, thereby enhancing the user's comfort. Additionally, the rear covering segment 222, which jointly clamps the ear region with the free end 102, does not cover on the elastic frame 21, i.e., the rear covering segment 222 may be located downstream of an elastic support member along the extension direction from the first end 201 toward the second end 202, so that the rear covering segment 222 is more prone to elastic deformation relative to the front covering segment 221, thereby increasing the comfort when fitting with the user's ear. On this basis, the buffer cavity 220 is formed in the rear covering segment 222, so that the rear covering segment 222 has a larger elastic range, and a larger elastic deformation can be realized to adapt to different widths of the ear, so as to improve the applicable range and the user's sense of use when wearing the earphone 100. Optionally, the material of the covering member 22 may include a non-metallic material with elasticity, such as silicone or rubber, and the material of the elastic frame 21 may include a metallic material or a non-metallic material, such as a titanium wire, a steel wire, or an elastic plastic member, etc., which is not limited herein.

Optionally, as shown in FIG. 9, the ear hook 2 includes a fixing block 23, the fixing block 23 is fixedly disposed at one end of the elastic frame 21 close to the second end 202, the front covering segment 221 covers on the fixing block 23, and an extension length D2 of the rear covering segment 222 along the extension direction is greater than an extension length D4 of the fixing block 23 along the extension direction.

The fixing block 23 is fixedly disposed at an end of the elastic frame 21 close to the second end 202, and the front covering segment 221 is made to cover on the fixing block 23, thereby improving the stability of the fixing between the front covering segment 221 and the elastic frame 21. The extension length D2 of the rear covering segment 222 along the extension direction is greater than the extension length D4 of the fixing block 23 along the extension direction, so that the rear covering segment 222 has a larger extension length, which provides sufficient contact area when worn by the user and ensures the wearing comfort of the user. Since the rear covering segment 222 and the front covering segment 221 may bend relative to each other during the elastic deformation of the ear hook 2, the disposing of the fixing block 23 can effectively reduce the possibility of the elastic frame 21 puncturing the rear covering segment 222 and increase the service life of the earphone 100.

Optionally, a ratio of the extension length D2 of the rear covering segment 222 along the extension direction to an extension length D1 of the front covering segment 221 along the extension direction is greater than or equal to one-fifth and is less than or equal to one-half, so that the rear covering segment 222 has a sufficient contact area with the user's ear when the earphone 100 is in the wearing state, and the elastic frame 21 covered by the front covering segment 221 can provide sufficient support strength to maintain the relative shape of the ear hook 2, improving the aesthetics and service life of the earphone 100.

Optionally, the extension length D1 of the front covering segment 221 along the extension direction is in a range of 50 mm to 70 mm. If the extension length D1 is too small, the front covering segment 221 may exert excessive pressure on the user's ear during wearing, resulting in low wearing comfort. If the extension length D1 is too large, the ear hook 2 may fail to securely grip the user's ear when wearing the earphone 100, resulting in an unstable fit.

Optionally, the extension length D2 of the rear covering segment 222 is in a range of 10 mm to 30 mm, in which the ear hook 2 can be both comfortable and aesthetically pleasing, thereby enhancing the user's sense of use. If the extension length D2 is too large, the rear covering segment 222 may extend beyond the user's ear in the wearing state, thereby affecting both the convenience of use and aesthetics. If the extension length D2 is too small, the rear covering segment 222 may have insufficient area and length to grip the user's ear during wearing, resulting in unstable wearing.

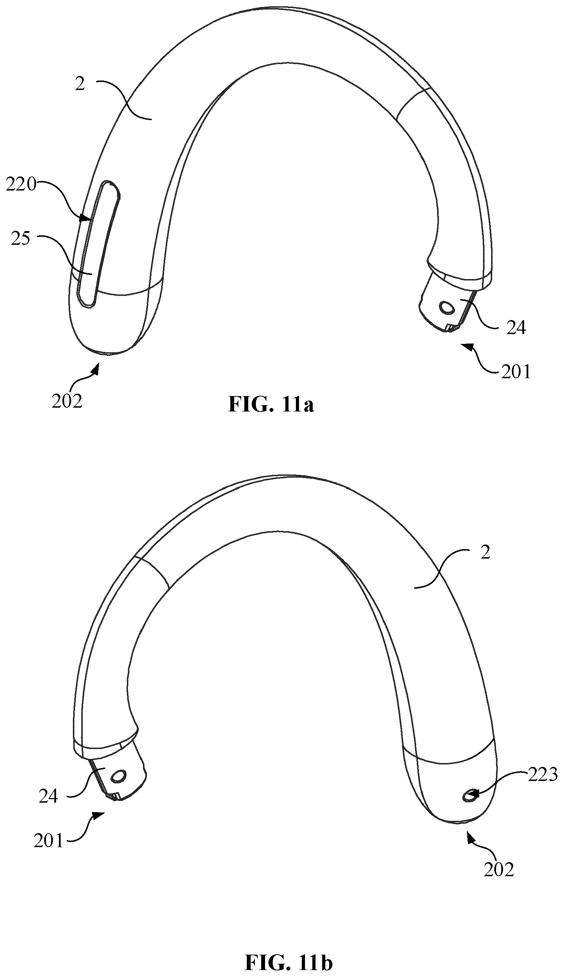

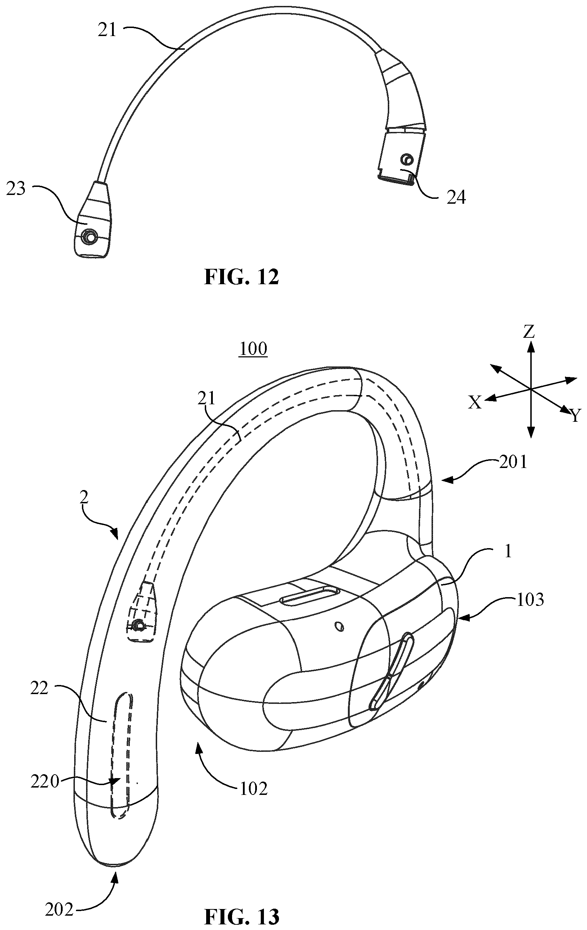

Optionally, as shown in FIG. 11a and FIG. 12, the ear hook 2 further includes a connector 24, the connector 24 is fixedly disposed at one end of the elastic frame 21 close to the first end 201, and the connector 24 is inserted and fixed to the core module 1. The ear hook 2 is inserted and fixed to the core module 1 by the connector 24, which effectively improves the stability of the connection between the ear hook 2 and the core module 1, and facilitates assembly and disassembly.

Optionally, the buffer cavity 220 is provided in a closed configuration, as shown in FIG. 13, formed inside the covering member 22. The buffer cavity 220 provided in a closed configuration can effectively prevent impurities such as dust, grease, and other impurities from entering the buffer cavity 220 and damaging the buffer cavity 220, thereby effectively enhancing the service life of the covering member 22.

Optionally, as shown in FIG. 8, the buffer cavity 220 is configured as a hole or groove, so as to better adapt to the elastic deformation of the covering member 22 and enhance the wearing comfort of the user. In some embodiments, the buffer cavity 220 is configured as a hole and penetrates through the covering member 22 in the thickness direction Y. In other embodiments, the buffer cavity 220 is configured as an elongated and curved through-hole, and a curved direction of the buffer cavity 220 matches a curved direction of the portion of the covering member 22 opened with the buffer cavity 220.

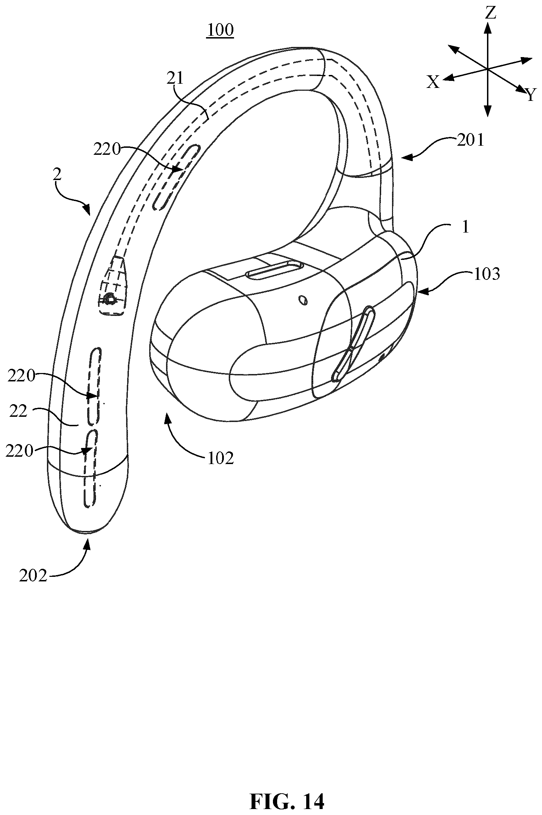

Optionally, as shown in FIG. 14, there are at least two buffer cavities 220, and the at least two buffer cavities 220 are spaced apart along the extension direction of the ear hook 2, which allows the covering member 22 to have a sufficient elastic range, thereby improving wearing comfort for the user while effectively reducing the risk of damage caused by an excessively wide ear, and enhancing the service life of the ear hook 2.

Optionally, as shown in FIG. 11a, the ear hook 2 further includes a filler member 25, the hardness of the filler member 25 is less than the hardness of the covering member 22, and the filler member 25 is disposed inside the buffer cavity 220, thereby providing a certain support for the covering member 22 without affecting the elastic deformation of the covering member 22, which improves the service life of the covering member 22, and thus improves the service life of the ear hook 2.

Optionally, the covering member 22 includes an inner side surface facing the core module 1 and an outer side surface away from the inner side surface, with the inner side surface being disposed closer to the buffer cavity 220 as compared to the outer side surface. The inner side surface of the covering member 22 refers to a surface that directly contacts the user's ear, and the buffer cavity 220 positioned closer to the inner side surface allows for better conformity and softness when the user wears the earphone 100, thus enhancing the user's comfort during wearing.

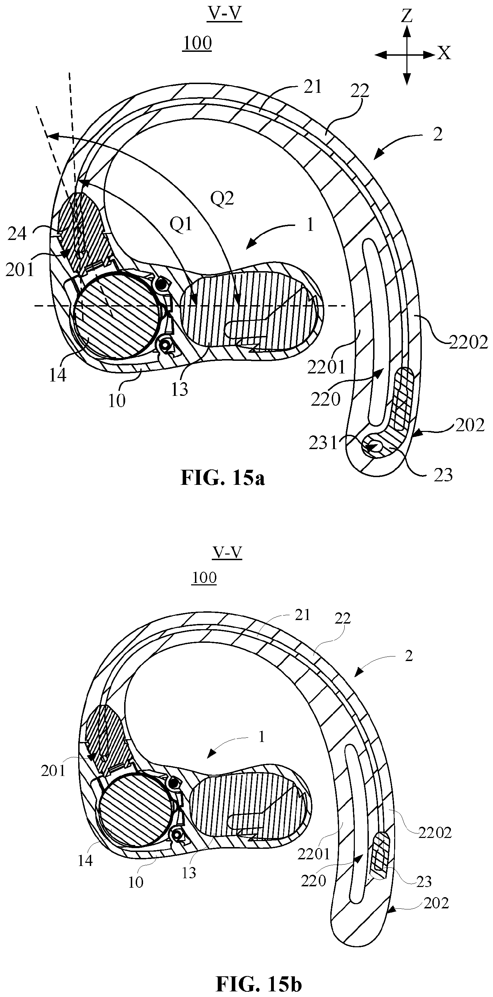

In the above embodiments illustrated in FIG. 9, FIG. 13, or the like, the elastic frame 21 and the buffer cavity 220 are spaced apart or adjacent to each other along the extension direction of the ear hook 2. However, in the embodiments illustrated in FIG. 15a and FIG. 15b, the elastic frame 21, and the buffer cavity 220 are spaced apart along the radial direction of the elastic frame 21. Specifically, the elastic frame 21 includes a preset radial direction perpendicular to the extension direction of the elastic frame 21 and passing through the buffer cavity 220, and the buffer cavity 220 is spaced from the elastic frame 21 along the preset radial direction. By setting in this way, on the basis of the buffer cavity 220 providing wearing comfort, the elastic frame 21 can provide better support strength at the position of the buffer cavity 220, which in turn provides higher wearing stability.

Specifically, the buffer cavity 220 is closer to the core module 1 along the preset radial direction as compared to the elastic frame 21, enabling the buffer cavity 220 to be closer to the ear in the wearing state. By setting in this way, the buffer cavity 220 can provide an elastic buffer when fitting the user's ear, resulting in better fit and softness, and enhancing wearing comfort.

Specifically, the covering member 22 includes a first covering portion 2201 and a second covering portion 2202 located on two sides of the buffer cavity 220 along the preset radial direction. The first covering portion 2201 and the second covering portion 2202 are spaced apart to form the buffer cavity 220. The first covering portion 2201 is closer to the core module 1 compared to the second covering portion 2202 for contacting the ear. In this way, the first covering portion 2201 is further away from the elastic frame 21, and the buffer cavity 220 provides a larger space for the deformation of the first covering portion 2201, thus enabling the first covering portion 2201 to fit the ear more effectively and provide a softer fit, thereby effectively improving wearing comfort.

As in an example shown in FIG. 15a, the elastic frame 21 may penetrate through and be disposed in the second covering portion 2202. Optionally, the elastic frame 21 extends along the direction from the first end of the ear hook 2 to the second end 202 of the ear hook 2. Such an arrangement can provide a fuller and stronger support for the ear hook 2, which in turn can effectively improve the wearing stability. Additionally, the elastic frame 21 extends along the direction from the first end 201 of the ear hook 2 to the second end 202 of the ear hook 2, so that it is not easy to puncture the covering member 22 when it is bent, thus improving its service life. Optionally, between the first end 201 and the second end 202 of the ear hook 2, the buffer cavity 220 is closer to the second end 202 of the ear hook 2.

In some embodiments, the elastic frame 21 continues to bend and extend above the buffer cavity 220 (i.e., a portion of the buffer cavity 220 close to the second end 202 of the ear hook 2) along the extension direction from the first end 201 to the second end 202 of the ear hook 2. That is to say, the elastic frame 21 may extend to a position between the buffer cavity 220 and the end of the second end 202, such an arrangement provides better support. In other embodiments, the fixing block 23 may be connected to one end of the elastic frame 21 extending toward the second end 202 of the ear hook 2. The fixing block 23 bends and extends from the elastic frame 21 toward the buffer cavity 220, and continues to bend and extend above the buffer cavity 220 (i.e., the portion of the buffer cavity 220 close to the second end 202 of the ear hook 2). That is to say, the fixing block 23 may extend to the position between the buffer cavity 220 and the end of the second end 202. By setting in this way, the fixing block 23 can provide better support as well as make the covering member 22 less susceptible to being punctured by the elastic frame 21.

In some embodiments, an end of the elastic frame 21 close the second end 202 is inserted within the fixing block 23, and a circumferential dimension of one end of the fixing block 23 away from the elastic frame 21 is greater than a circumferential dimension of the end of the fixing block 23 inserted with the elastic frame 21. By inserting the elastic frame 21 within the fixing block 23, the connection between the elastic frame 21 and the fixing block 23 can be realized, which is conducive to enhancing the stability of the connection between the two and may not have an impact on the support provided by the elastic frame 21 for the ear hook 2. Additionally, the circumferential dimension of the end of the fixing block 23 away from the elastic frame 21 is larger than the circumferential dimension of the end of the fixing block 23 inserted with the elastic frame 21, which is conducive to realizing the bending and extension of the fixing block 23 and reducing the difficulty of the production process of the fixing block 23, and is conducive to improving the strength and service life of the fixing block 23 and enabling a larger contact area between the fixing block 23 and the covering member 22, thereby reducing the processing difficulty of the ear hook 2 and improving the service life of the ear hook 2.

Optionally, as shown in FIG. 11b and FIG. 15a, the ear hook 2 is provided with a first positioning hole 223, and the fixing block 23 is provided with a second positioning hole 231. The second positioning hole 231 is located at the end of the fixing block 23 away from the elastic frame 21, and the first positioning hole 223 and the second positioning hole 231 are disposed opposite to each other. The first positioning hole 223 and the second positioning hole 231 disposed opposite each other can allow an external positioning device to locate the fixing block 23 through the first positioning hole 223, so that shapes, positions, and dimensions of components in the ear hook 2 can be more accurate, which is conducive to improving the yield rate of the ear hook 2. In addition, on the basis that the circumferential dimension of the end of the fixing block 23 away from the elastic frame 21 is larger than the circumferential dimension of the end of the fixing block 23 inserted with the elastic frame 21, the aperture diameter of the second positioning hole 231 can be relatively enlarged, which makes it easier for the outside positioning device to align.

In some embodiments, as shown in FIG. 15a, the end of the elastic frame 21 close to the first end 201 is inserted within the connector 24, and the extension direction of the end of the elastic frame 21 close to the first end 201 intersects with the extension direction of the connector 24. Such a setting can simultaneously realize a stable connection between the connector 24 and the core module 1 and a stable connection between the elastic frame 21 and the connector 24, which is conducive to enhancing the connection stability between the elastic frame 21 and the connector 24, as well as to enhancing the connection stability between the ear hook 2 and the core module 1.

Optionally, as shown in FIG. 14 and FIG. 15a, the core module 1 has a length direction X, a width direction Z, and a thickness direction Y that are perpendicular to each other. The core module 1 is configured to be stacked on the ear along the thickness direction Y in a wearing state. There is a first angle Q1 facing the ear hook 2 between the extension direction of the end of the elastic frame 21 close to the first end 201 and the length direction X, and there is a second angle Q2 facing the ear hook 2 between the extension direction of the connector 24 and the length direction X. The first angle Q1 is smaller than the second angle Q2. By setting the first angle Q1 and the second angle Q2 into two angles with different angle sizes to realize the mutual crossing between the elastic frame 21 and the connector 24, and by reasonably setting the angle sizes of the first angle Q1 and the second angle Q2, an end of the elastic frame 21 connected with the connector 24 can be closer to the center of a cross-section of the ear hook 2 while ensuring the connection stability between the connector 24 and the core module 1, which is more conducive to the elastic frame 21 providing good support for the ear hook 2, thereby enhancing the sense of use and service life of the earphone 100. Optionally, the first angle Q1 is in a range of 70° to 110°, for example, the first angle Q1 may be 80°, 85°, 90°, 95°, 100°, etc., and the second angle Q2 is in a range of 90° to 130°, for example, the second angle Q2 may be 100°, 105°, 110°, 115°, 120°, etc.

As in another example shown in FIG. 15b, the elastic frame 21 may extend to the second covering portion 2202. Optionally, the ear hook 2 includes the fixing block 23. The fixing block 23 is provided at the end of the elastic frame 21 close to the second end 202, and the covering member 22 covers on the fixing block 23. The fixing block 23 is disposed on a side of the buffer cavity 220 away from the core module 1, i.e., the fixing block 23 may be located at the second covering portion 2202. With such a setting, a side of the buffer cavity 220 close to the core module 1 can increase the contact area with the user's ear through deformation during wearing, reduce the pressure on the ear, and fit the user's ear more comfortably. On the one hand, it enhances wearing comfort, and on the other hand, this deformation buffer can realize the elastic tightness with the human ear, thereby enhancing the stability of wearing. Further, the fixing block 23 and a portion of the elastic frame 21 are located on the side of the buffer cavity 220 away from the core module 1 can enhance the support strength of the ear hook 2 without affecting the deformation of the buffer cavity 220, which enables the buffer cavity 220 to produce a more stable deformation and ensures a comfortable fit with the user's ear as well as wearing stability. Furthermore, the fixing block 23 reduces the possibility of the elastic frame 21 puncturing the second covering portion 2202, and improves the stability and reliability of the covering member 22.

Optionally, the fixing block 23 is located between two ends of the buffer cavity 220 along the extension direction of the ear hook 2 and closer to one end of the buffer cavity 220 that is close to the second end 102. Such an arrangement can cover the buffer cavity 220 more along the extension direction of the ear hook 2, effectively providing stronger support for the buffer cavity 220 to deform more and to better fit the ear, and also providing stronger support for the ear hook 2 to ensure the support performance of the ear hook 2.

To enhance the wearing comfort of the ear hook 2, a second exemplary structure of the ear hook 2 is illustrated in the following example.

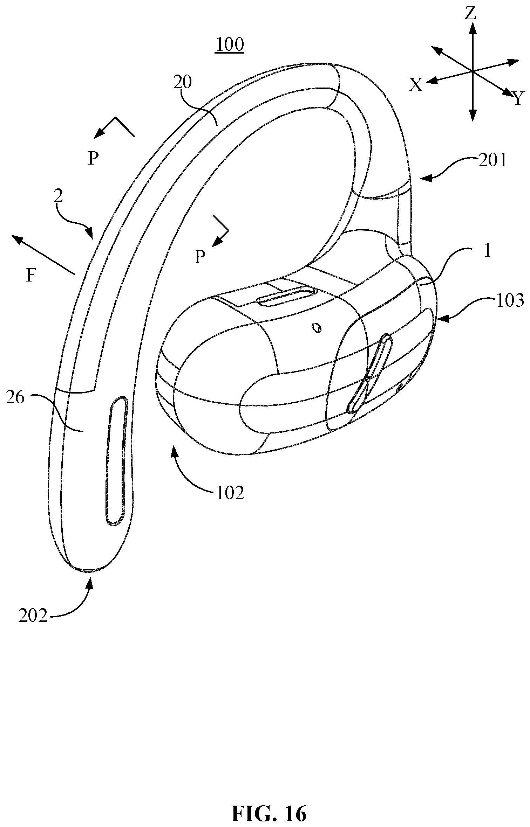

As shown in FIG. 16, the earphone 100 may include the core module 1 and the ear hook 2. The ear hook 2 is connected to the core module 1. In this regard, the ear hook 2 includes a connection main body 20 and an elastic buffer portion 26. The connection main body 20 is connected to the core module 1, and the elastic buffer portion 26 is connected to the connection main body 20. The connection main body 20 forms a first portion of an outer surface of the ear hook 2, and the elastic buffer portion 26 forms a second portion of the outer surface of the ear hook 2, with at least a portion of the second portion of the outer surface facing the core module 1. The hardness of the elastic buffer portion 26 is less than the hardness of the connection main body 20.

By providing the ear hook 2 including the connection main body 20 and the elastic buffer portion 26, where the elastic buffer portion 26 has a certain elastic limit and can undergo elastic deformation within that limit, the user can adjust the ear hook 2 to fit the ear by utilizing its elastic deformation when wearing the earphone 100, thereby effectively improving wearing comfort and stability. The elastic buffer portion 26 has a lower hardness than the connection main body 20, and at least a portion of the second portion of the outer surface of the elastic buffer portion 26 facing the core module 1 can come into direct contact with the ear when the user wears the earphone 100. Meanwhile, the connection main body 20, which has a relatively higher hardness, serves a supporting function, helping to maintain the aesthetic appearance of the ear hook 2 while effectively enhancing the user's wearing comfort.

Optionally, the elastic buffer portion 26 is detachably connected to the connection main body 20. By setting the elastic buffer portion 26 and the connection main body 20 as two detachable parts, it is easy to manufacture and assemble the earphone 100 and realize that a part can be replaced individually in the event of damage, which improves the convenience of the user and the service life of the earphone 100.

Optionally, the elastic buffer portion 26 and the connection main body 20 may be slidably connected, facilitating the installation and removal between the elastic buffer portion 26 and the connection main body 20, thereby enhancing the assembly efficiency and removal efficiency of the ear hook 2, and facilitating subsequent replacement of the elastic buffer portion 26 or the connection main body 20 individually.

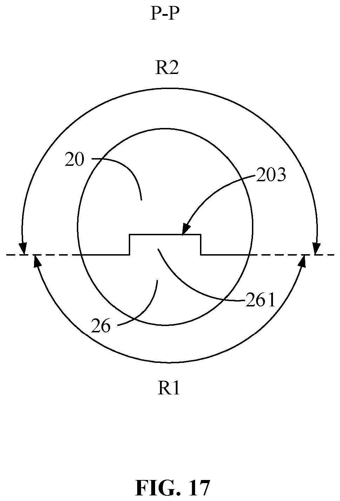

In some embodiments, as shown in FIG. 17, the elastic buffer portion 26 is provided with a sliding edge 261, the connection main body 20 is provided with a sliding groove 203, and the sliding edge 261 is slidably embedded in the sliding groove 203, effectively securing the elastic buffer portion 26 to the connection main body 20 and facilitating installation and removal.

In some embodiments, the elastic buffer portion 26 is bonded or magnetically adsorbed to the connection main body 20. The bonding and magnetic adsorption connection structure is simple, easy to install and remove, and there is no need to set up additional structures to realize the connection between the elastic buffer portion 26 and the connection main body 20, which effectively saves the production cost and reduces the subsequent maintenance costs.

Optionally, as shown in FIG. 16, the core module 1 includes the connection end 103 connected to one end of the ear hook 2 and a free end 102 away from the connection end 103. The core module 1 is used to be stacked on an ear of a user in a wearing state. The at least a portion of the second portion of the outer surface is provided opposite the free end 102.

The connection end 103 of the core module 1 is connected to the ear hook 2, and the free end 102 is provided opposite the at least a portion of the second portion of the outer surface of the elastic buffer portion 26, so that when the user wears the earphone 100, the free end 102 and the at least a portion of the second portion of the outer surface are clamped on two sides of the ear, and the elastic buffer portion 26 can adaptively undergo elastic deformation to facilitate the wearing of the user with different ear sizes, which effectively improves the adaptability of the earphone 100 while ensuring the stability of the earphone 100.

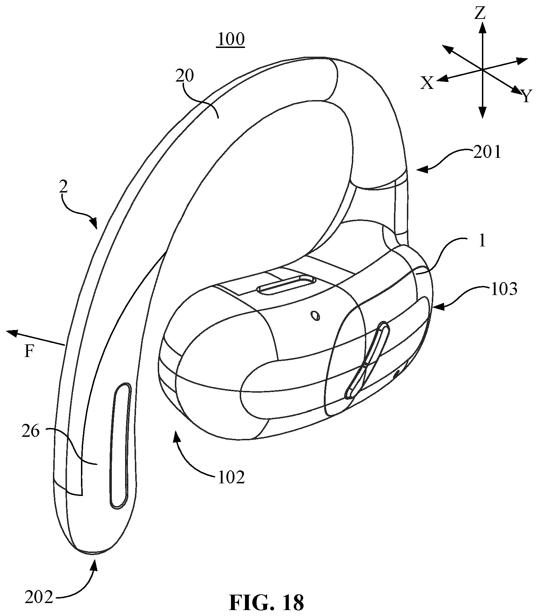

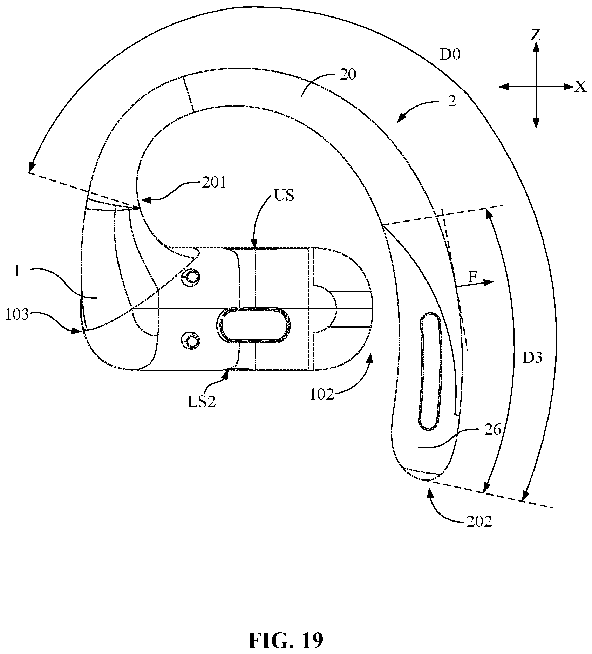

Optionally, as shown in FIG. 18 and FIG. 19, if an extension length D3 of the elastic buffer portion 26 along an extension direction of the ear hook 2 is greater than or equal to one-third of an extension length D0 of the ear hook 2 along the extension direction, the elastic buffer portion 26 has a sufficient contact length with the user's ear when the user wears the earphone 100, thereby enhancing the contact area between the elastic buffer portion 26 and the ear to better fit the ear and enhance the user's wearing comfort.

Optionally, as shown in FIG. 17, in a segment portion along the extension direction of the ear hook 2, there may be both the elastic buffer portion 26 and the connection main body 20 on the same cross-section perpendicular to the extension direction of the ear hook 2. A ratio of a circumferential dimension R1 of an outer edge of the elastic buffer portion 26 to a circumferential dimension R2 of an outer edge of the connection main body 20 is greater than or equal to 0.2 and less than 1, so that, while the connection main body 20 provides sufficient support for the ear hook 2 to safeguard the relative morphology of the ear hook 2, the elastic buffer portion 26 with a low hardness can alleviate the discomfort caused by the compression exerted by the ear hook 2 when the user wears the earphone 100, thereby improving the wearing comfort.

Optionally, as shown in FIG. 16 and FIG. 18, the core module 1 has a length direction X, a width direction Z, and a thickness direction Y that are perpendicular to each other, and the core module 1 is configured to be stacked on the ear of the user along the thickness direction Y in the wearing state. An orthographic projection of the elastic buffer portion 26 on a reference plane perpendicular to the length direction X is partially overlapped with an orthographic projection of the free end 102 on the reference plane, i.e., an orthographic projection of the elastic buffer portion 26 on a reference plane that is parallel to the width direction Z and the thickness direction Y is partially overlapped with the orthographic projection of the free end 102 on the reference plane.

The elastic buffer portion 26 is provided such that the orthographic projection of the elastic buffer portion 26 on the reference plane perpendicular to the length direction X is partially overlapped with the orthographic projection of the free end 102 on the reference plane, i.e., the free end 102 and at least a portion of the elastic buffer portion 26 are clamped on two sides of the ear, thereby not exerting excessive pressure when clamping the user's ear while ensuring stability, and safeguarding the fit while enhancing comfort.

Further, as shown in FIG. 16 and FIG. 18, the elastic buffer portion 26 is located closer to the core module 1 compared to the connection main body 20, which increases the contact area between the elastic buffer portion 26 with a lower hardness and the user's ear, allowing for a better fit to the contour of the ear when clamping the ear, thereby enhancing overall wearing comfort. In some embodiments, the elastic buffer portion 26 may be closer to the core module 1 along the radial direction of the ear hook 2 as compared to the connection main body 20, and the radial direction of the ear hook 2 is perpendicular to the extension direction of the ear hook 2.

Further, as shown in FIG. 16, FIG. 18, and FIG. 19, the elastic buffer portion 26 and the connection main body 20 are spliced together. In this way, when the ear hook 2 is hang on the ear of the user, the contact area between the elastic buffer portion 26, which has a lower hardness, and the ear of the user is improved, and the contact area between the connection main body 20, which has a higher hardness, and the ear of the user is decreased, thereby improving the comfort of the user. In some embodiments, the elastic buffer portion 26 and the connection main body 20 may, for example, be spliced with each other along the normal direction F of an outer contour of the ear hook 2 and along the extension direction of the ear hook 2, and the normal direction F of the outer contour of the ear hook 2 is perpendicular to the direction of the outer contour of the ear hook 2. The elastic buffer portion 26 and the connection main body 20 are spliced along the normal direction F of the outer contour of the ear hook 2 for easy positioning and installation, effectively reducing the difficulty of assembly.

Optionally, as shown in FIG. 16, FIG. 18, and FIG. 19, the ear hook 2 includes the first end 201 and the second end 202 opposite to each other. The first end 201 connects to the core module 1, the second end 202 is located at the elastic buffer portion 26, and the elastic buffer portion 26 is closed at the second end 202 along a circumferential direction. A portion of the elastic buffer portion 26 forming the second end 202 is located below the connection main body 20 along a direction from the first end 201 of the ear hook 2 toward the second end 202 of the ear hook 2, and another portion of the elastic buffer portion 26 is disposed at a side of the connection main body 20 toward the core module 1. The splicing of the elastic buffer portion 26 and the connection main body 20 can reduce the difficulty of assembling, and improve the stability and reliability of the connection. Setting a portion of the elastic buffer portion 26 to be disposed on the side of the connection main body 20 toward the core module 1 allows the elastic buffer portion 26 to come into contact with the user's ear more compared to the connection main body 20, thereby improving the wearing comfort. Setting a portion of the elastic buffer portion 26 forming the second end 202 to be located below the connection main body 20 along the direction from the first end 201 of the ear hook 2 toward the second end 202 of the ear hook 2, it is conducive to improving the contact area between the elastic buffer portion 26 and the ear, and improving the wearing stability while ensuring the wearing comfort. The elastic buffer portion 26 is closed at the second end 202 along the circumferential direction, which can prevent external impurities from entering the elastic buffer portion 26 to avoid damage to the interior of the elastic buffer portion 26 and increase the service life of the elastic buffer portion 26.

Further, as shown in FIG. 16 to FIG. 19, the first end 201 is connected to the core module 1, and the circumferential dimension R1 of the elastic buffer portion 26 is gradually increased or increased in a stepped manner along a direction from the first end 201 toward the second end 202. Since the first end 201 is connected to the core module 1, the first end 201 requires higher hardness to safeguard the stability and reliability when connecting the ear hook 2, and needs to provide sufficient support to maintain the relative position between the ear hook 2 and the core module 1 to guarantee that the user can wear and use the earphone 100 normally, so the elastic buffer portion 26 with lower hardness has a smaller circumferential dimension R1 near the first end 201, and the circumferential dimension R1 of the elastic buffer portion 26 increases gradually or increases in a stepped manner along the direction of from the first end 201 toward the second end 202, to effectively improve the user's comfort of use.

Optionally, as shown in FIG. 16 to FIG. 19, the connection main body 20 and the elastic buffer portion 26 are connected sequentially along the extension direction of the ear hook 2, with the second end 202 disposed at the elastic buffer portion 26. The elastic buffer portion 26 and the connection main body 20 can smoothly transition along the extension direction of the ear hook 2 at the ends connected to each other, thereby enhancing the aesthetics of the ear hook 2 and the stability of the connection while guaranteeing the wearing comfort. In some embodiments, the circumferential dimension R2 of the connection main body 20 becomes progressively smaller along a direction from an end connected to the elastic buffer portion 26 toward the first end 201. In some embodiments, the circumferential dimension R2 of the connection main body 20 becomes progressively smaller and then progressively larger along the direction from the end connected to the elastic buffer portion 26 toward the first end 201. In other embodiments, the circumferential dimension R2 of the connection main body 20 at the end connected to the elastic buffer portion 26 is the maximum circumferential dimension of the connection main body 20.

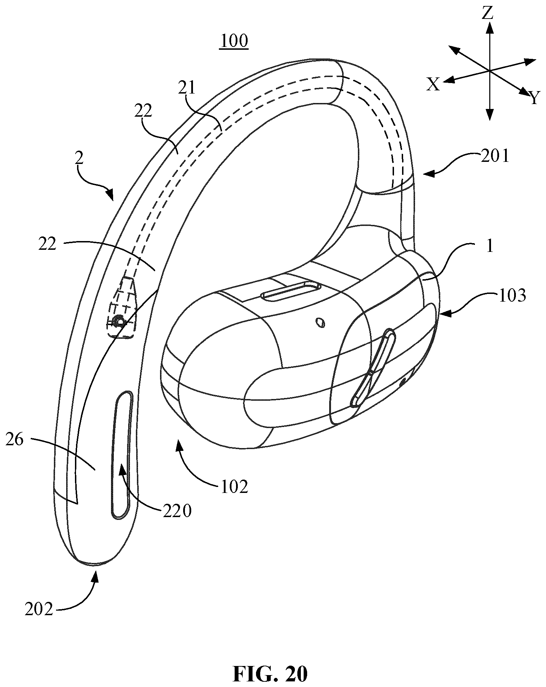

Optionally, as shown in FIG. 20, the connection main body 20 includes the elastic frame 21 and the covering member 22. The covering member 22 covers on at least a portion of the elastic frame 21. The elastic buffer portion 26 is connected to the covering member 22, a hardness of the elastic buffer portion 26 is less than a hardness of the covering member 22, and the hardness of the covering member 22 is less than a hardness of the elastic frame 21. The main support is provided by the elastic frame 21 to maintain the relative shape of the ear hook 2, preventing the user from failing to use the ear hook 2 normally due to deformation of the ear hook 2, and setting of the covering member 22 and the elastic buffer portion 26 with decreasing hardness in sequence can avoid direct contact between the elastic frame 21 with higher hardness and the user's ear, and enhance the wearing comfort of the user. Optionally, the buffer cavity 220 is provided in the ear hook 2. For example, the buffer cavity 220 may be provided in the covering member 22, the buffer cavity 220 may be provided in the elastic buffer portion 26, or the buffer cavity 220 may be provided in the covering member 22 and the elastic buffer portion 26, to increase the softness and deformable range of the ear hook 2 and improve the user's wearing comfort, as described in the above embodiments.

**In** some embodiments, the covering member 22 covers a portion of the elastic frame 21, the elastic buffer portion 26 covers another portion of the elastic frame 21, and by the elastic frame 21 acting as the bracket and a connection bridge of the ear hook 2, the connecting stabilization and the reliability of the ear hook 2 are improved.

In some embodiments, the covering member 22 and the elastic buffer portion 26 are connected sequentially along the extension direction, and the elastic buffer portion 26 does not enclose the elastic frame 21 but is located downstream of the elastic frame 21 along the extension direction of the ear hook 2, so that the flexibility and deformability range of the elastic buffer portion 26 are not affected, thereby maximizing the user comfort and the applicability range of the earphone 100.

To enhance the wearing comfort of ear hook 2, a third exemplary structure of the ear hook 2 is illustrated in the following example.

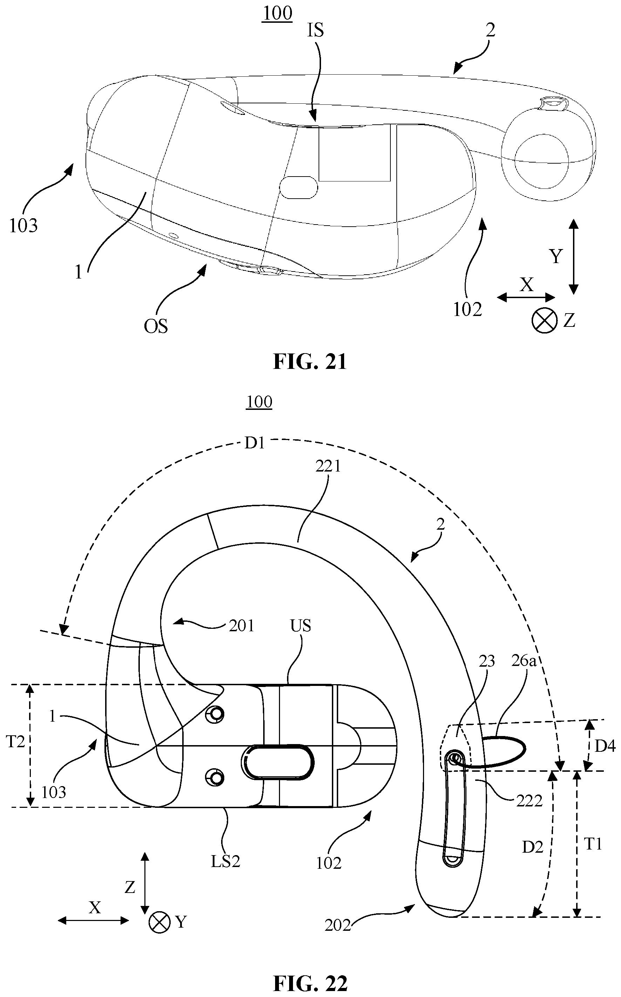

Referring to FIG. 21 to FIG. 24, the ear hook 2 includes the first end 201 and the second end 202 disposed opposite to each other, and the first end 201 is connected to the core module 1. The ear hook 2 is used to hang on an ear 500 of a user. The ear hook 2 includes the elastic frame 21, the covering member 22, and the fixing block 23. The elastic frame 21 is provided along an extension direction from the first end 201 to the second end 202. The covering member 22 includes the front covering segment 221 and the rear covering segment 222. The front covering segment 221 and the rear covering segment 222 are connected along the extension direction. The fixing block 23 is disposed at an end of the elastic frame 21 that is away from the first end 201. The front covering segment 221 covers on the elastic frame 21 and the fixing block 23. The rear covering segment 222 does not cover on the elastic frame 21 and the fixing block 23, but is located downstream of the fixing block 23 along the extension direction. An extension length D2 of the rear covering segment 222 along the extension direction is greater than or equal to an extension length D4 of the fixing block 23 along the extension direction. By setting in this way, the elastic frame 21 can be prevented from puncturing the covering member 22, it is easier to be processed and molded, and the precision of processing can be effectively improved.

The core module 1 is used to realize sound playback. The ear hook 2 is connected to the core module 1 through the first end 201, which may enable the core module 1 to remain close to or in contact with the ear 500 of the user. The elastic frame 21 in the ear hook 2 may function as a support for the covering member 22. The elastic frame 21 may be deformed to some degree. The covering member 22 may cover on the elastic frame 21 and may deform accordingly with the deformation of the elastic frame 21. In this way, the user can adjust the shape of the ear hook 2 by adjusting the shape of the elastic frame 21, so that the ear hook 2 can better adapt to the shape of the ear 500 of the user, thereby improving the user's wearing comfort and making the earphone 100 more stable to wear.

By setting the rear covering segment 222 on the basis of the front covering segment 221, and setting the extension length D2 of the rear covering segment 222 along the extension direction to be greater than or equal to the extension length D4 of the fixing block 23 along the extension direction, it can be ensured that the rear covering segment 222 has a sufficient length along the extension direction, which can increase the extension length of the ear hook 2 along the extension direction and improve the wearing comfort and stability of the earphone 100. By setting the rear covering segment 222 to not cover on the elastic frame 21 and the fixing block 23, the rear covering segment 222 is not supported by the elastic frame 21 and the fixing block 23, which reduces the force of the rear covering segment 222 on the ear and improves the wearing comfort of the user. At the same time, the rear covering segment 222 does not have the elastic frame 21, which reduces the material used for the elastic frame 21 and lowers the cost.

If the fixing block 23 is not provided, there is a risk that the titanium wire inside the elastic frame 21 may pierce the covering member 22 (e.g., the rear covering segment 222) when the rear covering segment 222 is elastically bent relative to the front covering segment 221. Therefore, by disposing the fixing block 23 at the end of the elastic frame 21 away from the first end 201, the direct contact between the end of the elastic frame 21 away from the first end 201 and the rear covering segment 222 can be reduced when the rear covering segment 222 is bent relative to the front covering segment 221, thereby reducing the risk of the end of the elastic frame 21 away from the first end 201 piercing the covering member 22 (e.g., the rear covering segment 222) as well as reducing wearing discomfort caused by the end of the elastic frame 21 away from the first end 201.

Further, a radial dimension of the fixing block 23 perpendicular to the extension direction may be larger than a radial dimension of the elastic frame 21 away from the first end 201 perpendicular to the extension direction. In other words, the circumferential dimension of the fixing block 23 may be larger than the circumferential dimension of the elastic frame 21.

Optionally, the material of the covering member 22 is silicone, plastic, or rubber.

Referring to FIG. 22, in some embodiments, the extension length D2 of the rear covering segment 222 along the extension direction is in a range of 10 mm to 25 mm.

According to the data of the large model of the human ear contour, since the front covering segment 221 is closer to the hanging position at the rear side of the ear tip (for hanging the ear hook 2), the more the ear hook 2 extends toward the second end 202 of the ear hook 2, the greater the deviation of the ear hook 2 from the natural contour of the human ear, and thus the more the ear hook 2 is backward, the more the need for a greater deformation capacity. By setting the extension length D2 of the rear covering segment 222 along the extension direction to be greater than or equal to 10 mm, it can be ensured that the rear covering segment 222 has sufficient length and deformation capacity along the extension direction, which can well balance the shape stability (fatigue resistance) and comfort performance (adaptability to a wider range of people) of the ear hook 2. Additionally, when the rear covering segment 222 is set in this way, it can be ensured that the fixing block 23 may not puncture the rear covering segment 222 of the covering member 22.

By setting the extension length D2 of the rear covering segment 222 along the extension direction to be less than or equal to 25 mm, the earphone 100 can be made to have a more concise structure. Further, the extension length D2 of the rear covering segment 222 along the extension direction is in a range of 12 mm to 25 mm. For example, the extension length D2 of the rear covering segment 222 along the extension direction is 12 mm, 15 mm, 18 mm, 20 mm, or 22 mm.

Optionally, an extension length D1 of the front covering segment 221 along the extension direction is in a range of 35 mm to 80 mm.

By setting the extension length D1 of the front covering segment 221 along the extension direction to be greater than or equal to 35 mm, it can be ensured that the front covering segment 221 has a sufficient length along the extension direction to enhance the wearing stability of the earphone 100. By setting the extension length D1 of the front covering segment 221 along the extension direction to less than or equal to 70 mm, the force of the front covering segment 221 on the human ear can be reduced to improve the user's comfort, and at the same time, it can reduce the material used for the elastic frame 21 and lower the cost. For example, the extension length D1 of the front covering segment 221 along the extension direction is 40mm, 45mm, 48mm, 50mm, 55mm, 60mm, 65mm, or 68mm.

Optionally, the extension length D4 of the fixing block 23 along the extension direction is in a range of 6 mm to 15 mm. For example, the extension length D4 of the fixing block 23 along the extension direction of the ear hook 2 may be 8 mm, 10 mm, or 12 mm. By setting it in this way, on the one hand, it is possible to make the fixing block 23 to have a sufficient and reasonable length to cover the end of the elastic frame 21, making it more difficult for the elastic frame 21 to puncture the covering member 22, thereby effectively reducing the probability of the end of the elastic frame 21 puncturing the covering member 22 and improving the fixing effect of the elastic frame 21 and the fixing block 23. On the other hand, the above dimension setting can make the fixing effect between the covering member 22 and the fixing block 23 better, so that the covering member 22 better covers on the fixing block 23, and thus the fixing effect between the fixing block 23 and the elastic frame 21 is also better.

Referring to FIG. 22, in some embodiments, a ratio of the extension length D1 of the front covering segment 221 along the extension direction to the extension length D2 of the rear covering segment 222 along the extension direction is greater than or equal to 2 and less than or equal to 4.5.

According to the data of the large model of the human ear contour, since the front covering segment 221 is closer to the hanging position at the rear side of the ear tip (for hanging the ear hook 2), the more the ear hook 2 extends toward the second end 202 of the ear hook 2, the greater the deviation of the ear hook 2 from the natural contour of the human ear, and thus the more the ear hook 2 is backward, the more the need for a greater deformation capacity. With the combination of the dimensions of the front covering segment 221 and the rear covering segment 222, the front covering segment 221 may be used as the deformation force arm of the rear covering segment 222 so that the rear covering segment 222 can obtain higher deformation capacity, which can well balance between the performance of the ear hook 2 in terms of its shape stability (fatigue resistance) and its comfort performance (adaptability to a wider range of people).

For example, the ratio of the extension length D1 of the front covering segment 221 along the extension direction to the extension length D2 of the rear covering segment 222 along the extension direction is in a range of 2.2 to 2.5, in a range of 2.6 to 2.8, or in a range of 3.0 to 3.5. Further, the ratio of the extension length D1 of the front covering segment 221 along the extension direction to the extension length D2 of the rear covering segment 222 along the extension direction is in a range of 3.3 to 3.4.

If the ratio of the extension length D1 of the front covering segment 221 along the extension direction to the extension length D2 of the rear covering segment 222 along the extension direction is less than 2, the ear hook 2 has a lower wearing stability. If the ratio of the extension length D1 of the front covering segment 221 along the extension direction to the extension length D2 of the rear covering segment 222 along the extension direction is greater than 4, the ear hook 2 is less comfortable to wear. By setting the ratio of the extension length D1 of the front covering segment 221 along the extension direction to the extension length D2 of the rear covering segment 222 along the extension direction to be greater than or equal to 2 and less than or equal to 4.5, it enables the ear hook 2 to have both good wearing stability and comfort.

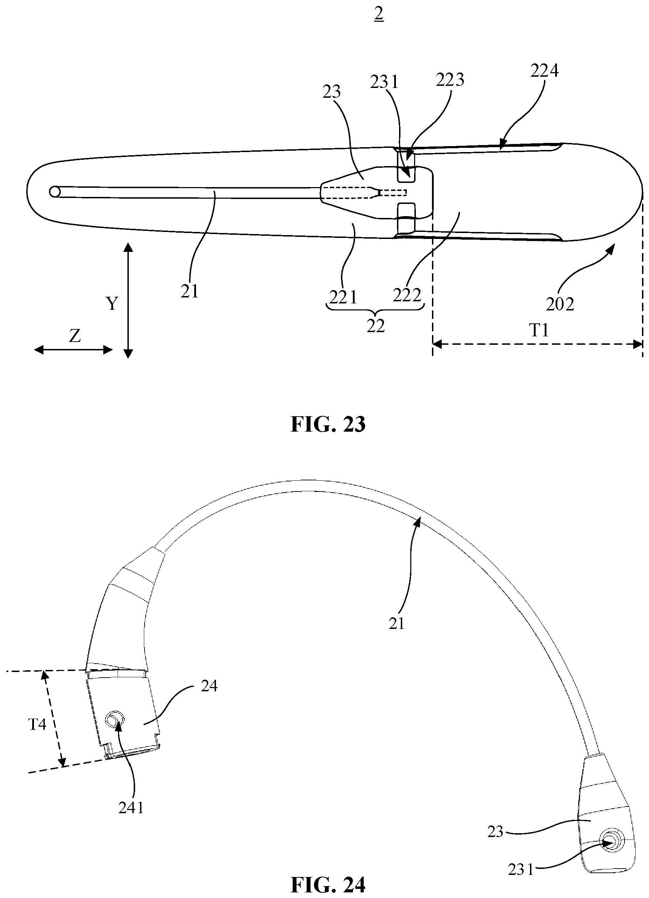

Referring to FIG. 23, in some embodiments, an end of the elastic frame 21 away from the first end 201 is inserted with the fixing block 23.

By setting the end of the elastic frame 21 away from the first end 201 to be inserted with the fixing block 23, the fixing block 23 can cover the end of the elastic frame 21 away from the first end 201, which is conducive to stably fixing the fixing block 23 at the end of the elastic frame 21 away from the first end 201, thereby reducing the damage of the end of the elastic frame 21 away from the first end 201 to the covering member 22, and reducing the discomfort caused by the elastic frame 21 away from the end of the first end 201.

Referring to FIG. 23, in some embodiments, a junction between an end surface of the fixing block 23 toward the rear covering segment 222 and a circumferential side surface of the fixing block 23 is chamfered or formed as a curved surface. For example, the junction between the end face of the fixing block 23 toward the rear covering segment 222 and the circumferential side surface of the fixing block 23 is a curved transition.

The front covering segment 221 provides a relatively strong support to the user's ear 500, and the rear covering segment 222 provides a relatively weak support to the user's ear 500. By chamfering or setting a curved surface at the junction between the end surface of the fixing block 23 toward the rear covering segment 222 and the circumferential side surface of the fixing block 23, a smoother transition can be achieved in the support provided by the rear covering segment 222 and the front covering segment 221 at their junction to the user's ear 500, thereby improving wearing comfort.

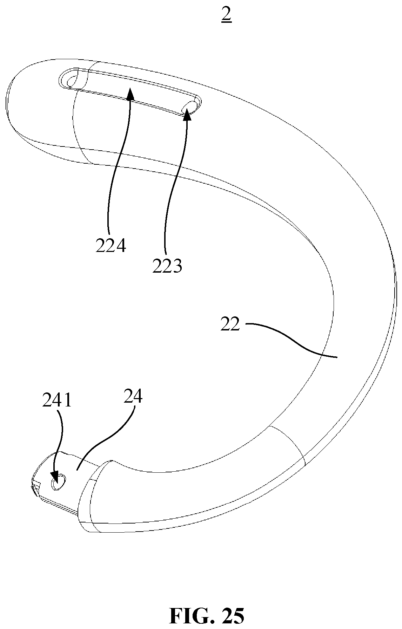

Referring to FIG. 23 and FIG. 25, in some embodiments, the front covering segment 221 and/or the rear covering segment 222 is provided with the first positioning hole 223, and the fixing block 23 may be exposed through the first positioning hole 223.

In the production process of the ear hook 2, the first positioning hole 223 can avoid an external positioning device, thereby allowing the external positioning device to locate the fixing block 23 through the first positioning hole 223, and thus reducing the deformation of the elastic frame 21 during the production process of the ear hook 2, making the shape, positions, and dimensions of the components of the ear hook 2 more accurate, and improving the quality yield of the ear hook 2.

The front covering segment 221 is provided with the first positioning hole 223 for an external positioning device to act on the circumferential side surface of the fixing block 23 or on an end surface of the fixing block 23 back from the rear covering segment 222. The first positioning hole 223 provided in the rear covering segment 222 allows an external positioning device to act on the end surface of the fixing block 23 toward the rear covering segment 222. For example, the front covering segment 221 and the rear covering segment 222 are both provided with the first positioning hole 223, respectively, so that the external positioning device can act on different positions of the fixing block 23, improving the fixing effect of the fixing block 23.

Furthermore, the first positioning holes 223 are provided in pairs in both the front covering segment 221 and/or the rear covering segment 222. A pair of two first positioning holes 223 are provided opposite each other, such that opposite sides of the fixing block 23 may be exposed through the first positioning holes 223, respectively. Such a setting facilitates the positioning of the fixing block 23 and improves the fixing effect of the fixing block 23.

Referring to FIG. 23 and FIG. 25, in some embodiments, the first positioning hole 223 is disposed on a circumferential side of the front covering segment 221 and/or the rear covering segment 222, a groove 224 is disposed on the circumferential side of the front covering segment 221 and/or the rear covering segment 222, and the first positioning hole 223 is provided at a bottom of the groove 224.

On the one hand, the groove 224 reduces the dimension of the front covering segment 221 and/or the rear covering segment 222, provides a deformation space for the deformation of the front covering segment 221 and/or the rear covering segment 222, and enables the front covering segment 221 and/or the rear covering segment 222 to be more easily deformed when subjected to a force, which can facilitate wearing by the user and improve the wearing comfort. On the other hand, the groove 224 facilitates the user to recognize the earphone 100 by touch, which is conducive to the user sensing the posture and position of the earphone 100 in the space by touching, thereby enabling correct wearing and use of the earphone 100 without relying on visual assistance.

Referring to FIG. 23 and FIG. 25, in some embodiments, the first positioning hole 223 is disposed at one end of the groove 224, and the other end of the groove 224 extends towards a direction closer to the second end 202.

This setting facilitates the user to sense both the second end 202 and the groove 224 by touching, which makes it easier for the user to sense the posture and position of the earphone 100 in the space by touching. At the same time, the groove 224 is located more at the rear covering segment 222, which facilitates the rear covering segment 222 to deform.

Referring to FIG. 21, FIG. 23, and FIG. 1, in some embodiments, the core module 1 has a length direction X, a width direction Z, and a thickness direction Y that are perpendicular to each other, and the core module 1 is configured to be stacked on the ear 500 in a wearing state along the thickness direction Y. The first positioning hole 223 is provided extending along the thickness direction Y.

The covering member 22 may be covered around the elastic frame 21 by injection molding, while the first positioning hole 223 is molded into the covering member 22 by injection molding. By setting the first positioning hole 223 to extend along the thickness direction Y, the mold opening direction during the injection molding process aligns with the direction in which the mold separates from the first positioning hole 223, thereby facilitating demolding of the covering member 22.

Further, the first positioning hole 223 is provided on a side of the ear hook 2 in the wearing state toward the core module 1. Such a setting is conducive to shading the first positioning hole 223 by the ear 500 in the wearing state, and to improving the aesthetic appearance of the earphone 100.

Referring to FIG. 23, optionally, the fixing block 23 is provided with the second positioning hole 231, and the first positioning hole 223 and the second positioning hole 231 are provided opposite each other and in communication with each other.

Providing the second positioning hole 231 makes it convenient for the external positioning device to position the fixing block 23, which is conducive to enhancing the fixing effect. For example, the external positioning device may be inserted into the second positioning hole 231 to position the fixing block 23.

Further, the second positioning hole 231 is a blind hole, which on one hand facilitates demolding during the injection molding process, and on the other hand prevents the second positioning hole 231 from penetrating through the fixing block 23, thereby allowing the fixing block 23 to maintain higher structural strength.

Further, the second positioning holes 231 are provided in pairs. The two second positioning holes 231 in a pair are provided opposite to each other, such that both opposite sides of the fixing block 23 can be fixed through the second positioning holes 231, respectively. Such a setting facilitates the positioning of the fixing block 23 and improves the fixing effect of the fixing block 23.

Referring to FIG. 22, in some embodiments, the earphone 100 further includes a functional member 26a, and the functional member 26a is detachably connected to the first positioning hole 223. By setting in this way, the aesthetic appearance and functionality of the earphone 100 can be improved. For example, the user wears the earphone 200 in each of his/her left and right ears. The functional member 26a may be configured to separably connect the two earphones 100 (e.g., by snap-fitting, bonding, threaded connection, magnetic connection, or additional fixing members), thereby reducing the risk of losing the earphones 100.

Referring to FIG. 22, further, the functional member 26a is a lanyard, and the lanyard may be used to connect the two earphones 100 together. It should be appreciated that the functional member 26a may also be an arcuate metal member, and the two functional members 26a may be spliced together in a larger arcuate structure.

In some embodiments, a hardness of the fixing block 23 is greater than a hardness of the covering member 22. By setting the fixing block 23 to have a greater hardness, the fixing block 23 can better protect the covering member 22. By setting the covering member 22 to have a smaller hardness, the wearing comfort of the user can be improved.

Optionally, the material of the covering member 22 is a softer plastic, silicone, or rubber, and the material of the fixing block 23 is a harder plastic or metal.

Referring to FIG. 22 and FIG. 23, optionally, the front covering segment 221 and the rear covering segment 222 are integrally molded, and the front covering segment 221 covers on an outer periphery of the elastic frame 21 and the fixing block 23 in an integrally molded manner. For example, the front covering segment 221 and the rear covering segment 222 are integrally molded by injection molding.

Setting up in this way enables the covering member 22 to have a good and uniform covering effect, and at the same time enables the front covering segment 221 and the rear covering segment 222 to be stably connected.

Referring to FIG. 22, in some embodiments, the core module 1 includes the connection end 103 connected to the first end 201 of the ear hook 2 and the free end 102 away from the connection end 103, and at least a portion of the rear covering segment 222 is arranged opposite to the free end 102. In this arrangement, when the earphone 100 is worn, at least a portion of the rear covering segment 222 and the free end 102 are located on both sides of the same position of the ear 500, respectively, thereby enabling them to apply forces in a balanced manner on both sides of the same position of the ear 500, which enhances wearing comfort.

Referring to FIG. 22, in some embodiments, the core module 1 includes the connection end 103 connected to the first end 201 of the ear hook 2 and the free end 102 away from the connection end 103, and a fixing member is arranged opposite the free end 102, thereby allowing the core module 1 and the front covering segment 221 to apply forces in a balanced manner on both sides of the ear 500, thus enhancing wearing stability.

Referring to FIG. 22 and FIG. 1, in some embodiments, the core module 1 has a length direction X, a width direction Z, and a thickness direction Y that are perpendicular to each other, and the core module 1 is used to be stacked on the ear 500 along the thickness direction Y when in a wearing state. A dimension T1 of the rear covering segment 222 along the width direction Z is greater than a dimension T2 of the core module 1 along the width direction Z.

Such a configuration allows the rear covering segment 222 to have a sufficient length along the width direction Z, thereby improving the wearing comfort and stability of the earphone 100.

Referring to FIG. 21 and FIG. 22, in some embodiments, along the thickness direction Y, the core module 1 includes an inner side surface IS facing the ear 500 and an outer side surface OS away from the ear 500 in a wearing state, and an upper side surface US and a lower side surface LS2 connecting the inner side surface IS and the outer side surface OS. The upper side surface US and the lower side surface LS2 are spaced apart along the width direction Z. The second end 202 is located at the rear covering segment 222, and the rear covering segment 222 extends over the lower side surface LS2 along the width direction Z.

Such a configuration can make the rear covering segment 222 have a sufficient length along the width direction Z, improving the wearing comfort of the earphone 100, and at the same time can make the ear hook 2 have a sufficient length along the width direction Z, improving the wearing stability of the earphone 100.

Referring to FIG. 22, in some embodiments, at least a portion of the fixing block 23 is located between an extension plane of the upper side surface US and an extension plane of the lower side surface LS2, and the extension length D4 of the fixing block 23 along the extension direction of the ear hook 2 is in a range of 6 mm to 15 mm. For example, a portion of the fixing block 23 is located between the extension plane of the upper side surface US and the extension plane of the lower side surface LS2, and another portion of the fixing block 23 is located on the side of the extension plane of the upper side surface US close to the first end 201, and the extension length D4 of the fixing block 23 along the extension direction of the ear hook 2 may be 8mm, 10mm or 12mm.

In this way, when the earphone 100 is worn, at least a portion of the fixing block 23 and the core module 1 are located on both sides of the same position of the ear 500, respectively, thereby enabling at least a portion of the fixing block 23 and the core module 1 to apply forces in a balanced manner on both sides of the same position of the ear 500, thus improving the wearing stability and support, and the rear covering segment 222 can effectively improve the wearing comfort. Moreover, the fixing block 23 at one end of the elastic frame 21 may extend between the extension plane of the upper side surface US and the extension plane of the lower side surface LS2 and be set to have the above-mentioned dimension. In this way, on the one hand, the elastic frame 21 and the fixing block 23 as a whole can have a larger force arm relative to the first end 201 of the ear hook 2, so that they can be deformed in a more labor-saving manner when in the wearing state. In other words, the pressure on the user's ear can be reduced while maintaining the same clamping effect, thereby improving the wearing comfort. On the other hand, the support can be improved, and the rear covering segment 222 can be more closely attached to the human ear, further providing better wearing comfort through the buffering capacity.

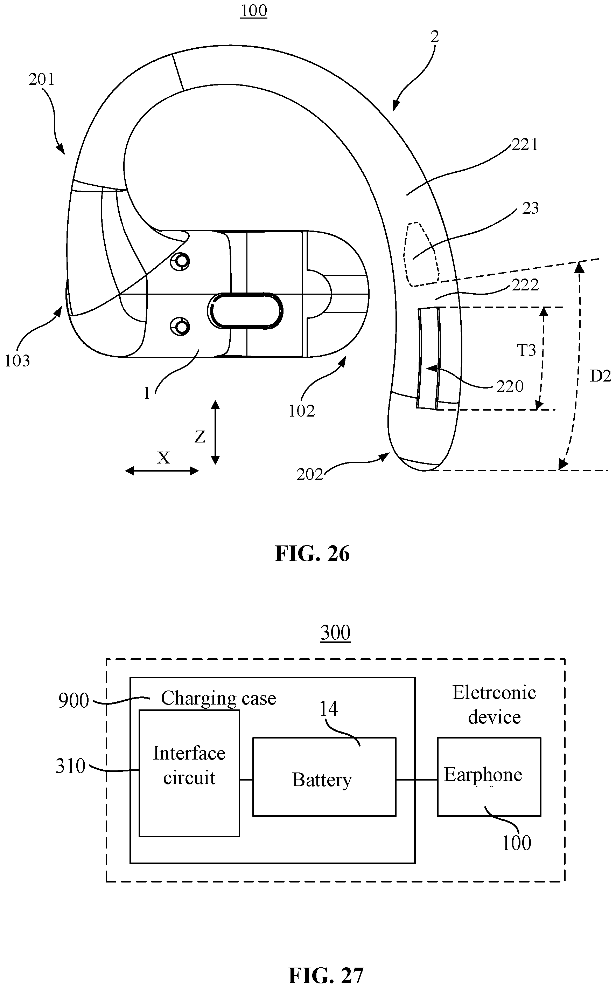

Referring to FIG. 26, in some embodiments, the rear covering segment 222 is provided with the buffer cavity 220, and at least a portion of the buffer cavity 220 is located at a portion of the rear covering segment 222 that is opposite the free end 102.

When the earphone 100 is worn, at least a portion of the buffer cavity 220 and the free end 102 are located on both sides of the same position of the ear 500, respectively, thereby enabling at least a portion of the rear covering segment 222 and the free end 102 to apply forces in a balanced manner on both sides of the same position of the ear 500. The buffer cavity 220 can reduce the dimension of the rear covering segment 222 and provide deformation space for the deformation of the rear covering segment 222, which makes it easier for the rear covering segment 222 to deform when subjected to force to adapt to the shape of the ear 500, reduces the force subjected by the ear 500 between the free end 102 and the rear covering segment 222, and makes it easier for users to wear, thereby improving the wearing comfort.

Referring to FIG. 1 and FIG. 26, in some embodiments, the free end 102 is configured to extend into the cavum concha 502 of the ear 500 in the wearing state, the free end 102 and the rear covering segment 222 are configured to clamp a region of the ear 500 from the front side and the rear side of the region of the ear 500 corresponding to the cavum concha 502 in the wearing state, and the buffer cavity 220 is located in a portion of the rear covering segment 222 used to clamp the region of the ear 500.

By setting the free end 102 to extend into the cavum concha 502 of the ear 500 in the wearing state, it is convenient for the ear to receive the sound emitted by the earphone 100. When the earphone 100 is in the wearing state, at least a portion of the buffer cavity 220 and the free end 102 are located in the front side and the rear side of the region of the ear 500 corresponding to the cavum concha 502, respectively, thereby enabling the portion of the rear covering segment 222 configured to clamp the region of the ear 500 and the free end 102 to apply forces in a balanced manner on the front and rear sides of the region of the ear corresponding to the cavum concha 502. The buffer cavity 220 can reduce the dimension of the rear covering segment 222 and provide a deformation space for the deformation of the rear covering segment 222, which makes it easier to deform the rear covering segment 222 to adapt to the shape of the ear 500 when it is subjected to a force and reduces the force subjected by the region of the ear 500 corresponding to the cavum concha 502 between the free end 102 and the rear covering segment 222, thereby making it easier for users to wear and improving wearing comfort.

Referring to FIG. 22, in some embodiments, the buffer cavity 220 is configured as an elongated through-hole or a groove, and a ratio of an extension length T3 of the buffer cavity 220 along the extension direction to an extension length D2 of the rear covering segment 222 along the extension direction is greater than or equal to one-half, and less than or equal to four-fifths. For example, the ratio of the extension length T3 of the buffer cavity 220 along the extension direction to the extension length D2 of the rear covering segment 222 along the extension direction is in the range of 0.6 to 0.7. For example, the ratio of the extension length T3 of the buffer cavity 220 along the extension direction to the extension length D2 of the rear covering segment 222 along the extension direction is one-third.

**In** this way, the buffer cavity 220 can provide a sufficient deformation space for the rear covering segment 222, and the rear covering segment 222 can maintain good support performance. The buffer cavity 220 is provided to facilitate tactile recognition through the buffer cavity 220 when taking off and wearing the earphone.

Referring to FIG. 24 and FIG. 25, in some embodiments, the ear hook 2 further includes a connector 24, and the connector 24 is fixedly disposed at one end of the elastic frame 21 close to the first end 201. The connector 24 is inserted into and fixed with the core module 1. An extension length T4 of the connector 24 along the extension direction is greater than the extension length D4 of the fixing block 23 along the extension direction.

By providing the connector 24, it is convenient to assemble the ear hook 2 and the core module 1. For example, through the connector 24, the ear hook 2 and the core module 1 may be snap-connected. By setting the extension length T4 of the connector 24 along the extension direction to be greater than the extension length D4 of the fixing block 23 along the extension direction, it is conducive to improving the connection stability between the ear hook 2 and the core module 1. In addition, such a setting can make the shape accuracy of an outer periphery of the connector 24 close to one end of the core module 1 higher when the ear hook 2 is injection molded, so that the overall product consistency of the ear hook 2 is improved.

Referring to FIG. 22, FIG. 24, and FIG. 25, in some embodiments, the elastic frame 21 is inserted into the connector 24, and a third positioning hole 241 is provided on a circumferential side of the connector 24. The core module 1 has a length direction X, a width direction Z, and a thickness direction Y that are perpendicular to each other, and the core module 1 is used to be stacked on the ear 500 along the thickness direction Y in the wearing state. The third positioning hole 241 extends along the thickness direction Y.

By setting the third positioning hole 241, during the production process of the ear hook 2, it is convenient for the external positioning device to position the connector 24, thereby reducing the deformation of the elastic frame 21 during the production process of the ear hook 2, making the shapes, positions, and dimensions among the various components of the ear hook 2 more accurate, and improving the quality yield of the ear hook 2.

The connector 24 may be formed by injection molding, and the third positioning hole 241 is formed in the connector 24 by injection molding. By setting the third positioning hole 241 to extend along the thickness direction Y, during the injection molding process, the mold opening direction of the mold is consistent with the direction in which the mold is separated from the third positioning hole 241, thereby facilitating the demolding of the connector 24.

Furthermore, the third positioning hole 241 is a blind hole, which can facilitate demolding during the injection molding process on the one hand, and can prevent the third positioning hole 241 from penetrating the fixed block 23 on the other hand, so that the fixing block 23 can maintain a high strength.

In some embodiments, as shown in FIG. 14 and FIG. 15a, the core module 1 has a length direction X, a width direction Z, and a thickness direction Y that are perpendicular to each other. The core module 1 is used to be stacked on the ear along the thickness direction Y in the wearing state. There is a first angle Q1 facing the ear hook 2 between an extension direction of an end of the elastic frame 21 close to the first end 201 and the length direction X, and there is a second angle Q2 facing the ear hook 2 between an extension direction of the connector 24 and the length direction X, the first angle Q1 being smaller than the second angle Q2.

Both the earphone 100 and other electronic devices 300, such as a computer, a cell phone, a tablet, or the like, may be provided with a charging interface and a data transmission interface, or a combination of the two. The following provides exemplary content regarding the interface of the electronic device 300.

As shown in FIG. 27, the electronic device 300 may include a battery 14 and an interface circuit 310. The interface circuit 310 is coupled to the battery 14, enabling an external charging device to charge the battery 14 via the interface circuit 310. The electronic device 300 may be a device such as a cell phone, a computer, an earphone device, or the like. The external charging device may be a device such as a charging treasure, a charging pile, or the like, that is capable of outputting electrical energy to the electronic device 300 via the interface circuit 310.

In some embodiments, as shown in FIG. 7, FIG. 8, and FIG. 27, the electronic device 300 may include the charging case 900 and the earphone 100. The charging case 900 accommodates the earphone 100 and is used to charge the earphone 100. The interface circuit 310 may be disposed within the charging case 900 to enable an external charging device to charge the charging case 900 via the interface circuit 310, enabling the charging case 900 to obtain power from the external charging device. The charging case 900 may be used to charge the earphone 100 when the earphone 100 is accommodated in the charging case 900.

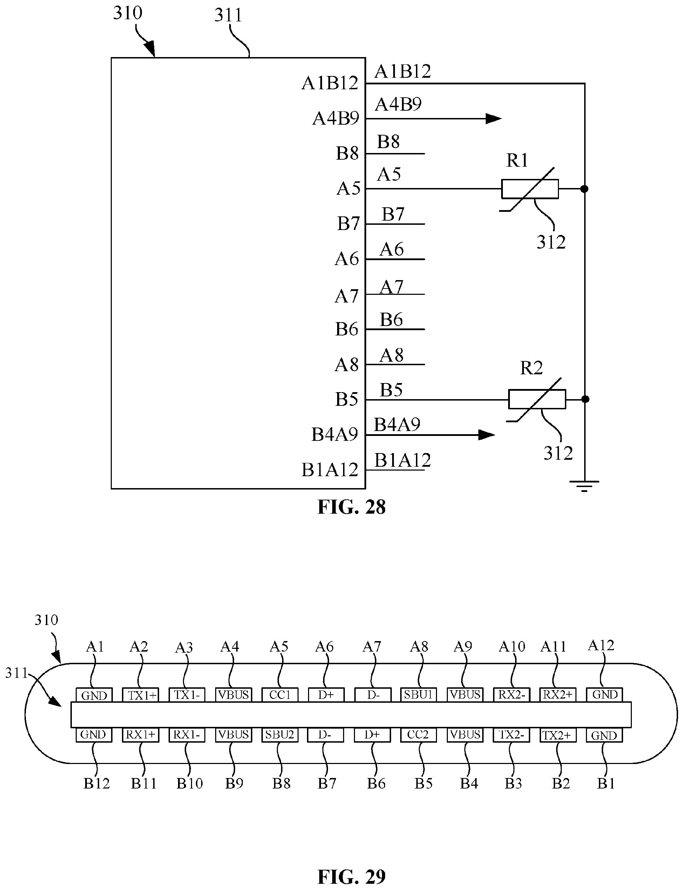

For example, the interface circuit 310 may include a powered interface 311 and a predetermined thermistor 312, as shown in FIG. 28. The powered interface 311 may include an identification pin A5(B5). The identification pin A5(B5) may be used for the external charging device to detect a coupling state between the interface circuit 310 and the external charging device when the interface circuit 310 is coupled with the external charging device and continuously transmit the coupling state to the external charging device, so that the external charging device can grasp the coupling state between the interface circuit 310 and the external charging device in real time and can react promptly according to the detected coupling state, to avoid causing safety accidents. In some embodiments, the external charging device may be configured to intermittently detect the coupling state between the interface circuit 310 and the external charging device. For example, the external charging device may detect the coupling state every 5s or 10s, so as to save energy consumption of the external charging device and the electronic device 300.

The predetermined thermistor 312 may be configured to change the coupling state of the interface circuit 310 as detected by the external charging device with a change in temperature of the powered interface 311. As shown in FIG. 28, the predetermined thermistor 312 may be coupled to the identification pin A5 (B5). The predetermined thermistor 312 further changes the coupling state between the interface circuit 310 and the external charging device based on the temperature of the powered interface 311 after detecting the temperature change of the powered interface 311, and the coupling state is transmitted to the external charging device via the identification pin A5 (B5). By setting the predetermined thermistor 312 and the identification pin A5 (B5) connected to the predetermined thermistor 312 in the interface circuit 310, the electronic device 300 enables an external charging device to monitor the temperature of the powered interface 311 promptly during charging via the interface circuit 310, which allows real-time awareness of the coupling state between the interface circuit 310 and the external charging device, thereby enabling more responsive subsequent actions based on the detected coupling state. As a result, the electronic device 300 can be protected promptly, minimizing the risk of safety incidents.

In some embodiments, the powered interface 311 may be a Type-C interface, and the identification pin A5 (B5) may be a configuration channel (CC) pin. Specifically, the Type-C interface is a USB interface form factor standard that has a smaller size than both Type-A and Type-B, and is an interface type that can be applied to both a PC (master device) and an external device (slave device, such as a cell phone, the earphone 100, or the charging case 900). The CC pin is primarily used to identify the type of device inserted into the powered interface 311 and communication, and is also used to confirm the direction of data transfer and the forward and reverse insertion directions. In some embodiments, setting the CC pin to be connected to the predetermined thermistor 312 enables the external charging device to receive data information related to the coupling state directly through the CC pin, improving the efficiency of the external charging device in determining the coupling state between the interface circuit 310 and the external charging device, and the internal components and space of the interface circuit 310 can also be saved, thereby improving the space utilization of the interface circuit 310.

It should be understood that in other embodiments, the powered interface 311 may be other interfaces, such as Type-A or Type-B, and the identification pin A5 (B5) may be other pins, such as a VBUS pin.

In some embodiments, the resistance value of the predetermined thermistor 312 may change with the temperature of the powered interface 311 for the external charging device to detect the coupling state based on the resistance value of the predetermined thermistor 312 via the identification pin A5 (B5). The predetermined thermistor 312 may specifically be a type of sensor resistor, typically characterized by its resistance value varying with temperature, i.e., exhibiting different resistance values at different temperatures. Accordingly, the resistance value of the predetermined thermistor 312 may directly reflect the temperature variation of the powered interface 311. Setting the external charging device to detect the coupling state between the external charging device and the interface circuit 310 directly based on the resistance value of the predetermined thermistor 312 can make the coupling state derived by the external charging device more accurate.

In some embodiments, the identification pin A5 (B5) may be grounded via the predetermined thermistor 312. Specifically, the predetermined thermistor 312 is provided between the identification pin A5 (B5) and the ground, so that when the external charging device is connected to the powered interface 311, if the temperature of the predetermined thermistor 312 is too high resulting in the resistance value of the predetermined thermistor 312 being too high, the predetermined thermistor 312 may block the connection between the identification pin A5 (B5) and the ground, and even the resistance value of the predetermined thermistor may appear to tend to infinity to disconnect the connection between the external charging device and the ground, so as to enable the external charging device to also determine the coupling state of the interface circuit 310 by connecting with the ground. Moreover, the predetermined thermistor 312 is directly connected to the identification pin A5 (B5), which enables the predetermined thermistor 312 to directly detect and reflect the temperature change of the powered interface 311 without being easily affected by other circuit components, and to more accurately transmit information about the coupling state between the interface circuit 310 and the external charging device to the external charging device.

In some embodiments, the predetermined thermistor 312 may be set such that a coupling state detected by the external charging device is normal when its resistance value is in a predetermined resistance range, and a coupling state detected by the external charging device is abnormal when its resistance value is not in the predetermined resistance range.

The predetermined resistance range may be set with reference to a temperature tolerance threshold of the powered interface 311 during normal operation, such that the predetermined resistance range characterizes the operating temperature of the powered interface 311 as normal when coupled to the external charging device.

In response to determining that the resistance value of the predetermined thermistor 312 is in the predetermined resistance range, it indicates that the temperature of the powered interface 311 is at a normal temperature, and at such a normal temperature, the powered interface 311 can maintain normal power supply, communication, and other functions with the external charging device, then it further indicates that the coupling state between the powered interface 311 and the external charging device is normal.

In response to determining that the resistance value of the predetermined thermistor 312 is not in the predetermined resistance range, it indicates that the temperature of the powered interface 311 detected by the predetermined thermistor 312 is at a temperature that is too high, and the powered interface 311 at that too high temperature will affect normal communication or power supply and other functions with the external charging device, and therefore the coupling state detected by the external charging device at this time is abnormal.

For example, the predetermined resistance range may be in a range of 4.9KΩ to 5.3KQ. The coupling state detected by the external charging device is normal when the resistance value of the predetermined thermistor 312 is in a range of 4.9KΩ to 5.2KQ, and the coupling state detected by the external charging device is abnormal when the resistance value of the predetermined thermistor 312 is less than 4.9KQ or greater than 5.2KQ. It should be understood that in other embodiments, the predetermined resistance range may also be other values. For example, if a different type of thermistor is used, the predetermined resistance range may be a resistance range corresponding to the thermistor. For example, the predetermined resistance range may also be in a range of 4.7KΩ to 5.4KQ, in a range of 5KΩ to 5.5KQ, and other resistance ranges that the present disclosure does not specifically enumerate herein.

By setting the predetermined resistance range of the predetermined thermistor 312, and detecting whether the resistance value of the predetermined thermistor 312 is in the predetermined resistance range in real time to reflect the coupling state between the powered interface 311 and the external charging device, it is possible to enable the external charging device to obtain more accurate detection results, which in turn can improve the safety of the interface circuit 310.

In some embodiments, a nominal resistance value of the predetermined thermistor 312 may be in a range of 4.8KΩ to 5.4KQ, and such a setting may enable the predetermined thermistor 312 to detect a wider range of operating temperatures to make the predetermined thermistor 312 more sensitive, thereby making the detection of the powered interface 311 by the external charging device more accurate. In other embodiments, depending on the type of thermistor, the nominal resistance value of the predetermined thermistor 312 may also be other resistors corresponding to the thermistor. For example, the nominal resistance value of the predetermined thermistor 312 may be in a range of 4.5KΩ to 5.5KQ, in a range of 4.9KΩ to 5.3KQ, and other values, and the present disclosure does not make specific limitations herein.

In some embodiments, the predetermined thermistor 312 may be set such that when the temperature of the powered interface 311 is in a predetermined temperature range, its resistance value is in the predetermined resistance range, and when the temperature of the powered interface 311 is not in the predetermined temperature range, its resistance value is not in the predetermined resistance range.

Specifically, the predetermined temperature range may be referenced to a normal temperature of the powered interface 311 when it is coupled to an external charging device and is capable of normal power supply, communication, and other operations, and the predetermined resistance range is configured to correspond to the predetermined temperature range. Therefore, if the temperature of the powered interface 311 is in the predetermined temperature range, the resistance value of the predetermined thermistor 312 is in the predetermined resistance range, and thus the coupling state detected by the external charging device is normal. If the temperature of the powered interface 311 is not in the predetermined temperature range, the resistance value of the predetermined thermistor 312 is not in the predetermined resistance range, and the coupling state detected by the external charging device is abnormal.

In some embodiments, when the operating temperature of the powered interface 311 is in a range of 0°C to 45°C and the powered interface 311 is capable of realizing normal power supply, communication, and other operations with the external charging device, the predetermined temperature range may be set to be in a range of 0°C to 45°C, and the predetermined resistance range corresponding to the predetermined temperature range may be set to be in a range of 4.9 KΩ to 5.3 KΩ. When the external charging device detects a coupling state as normal, it indicates that the temperature of the powered interface 311 is in the predetermined temperature range of 0°C to 45°C, the resistance value of the predetermined thermistor 312 is in the range of 4.9KΩ to 5.3KQ, and the powered interface 311 is in a normal operating state. When the temperature of the powered interface 311 is greater than 45°C., at this time, the powered interface 311 is not suitable for receiving power supply and communication from the external charging device, the resistance value of the predetermined thermistor 312 corresponds to a value exceeding the predetermined resistance range, such as less than 4.9 KΩ or more than 5.3 KΩ, and the coupling state detected by the external charging device is abnormal. In some embodiments, if the maximum temperature that the powered interface 311 can withstand is 80°C, the predetermined temperature range may be set to be in a range of 0°C to 75°C, at this time, if the temperature of the powered interface 311 exceeds the predetermined temperature range, the resistance value of the predetermined thermistor 312 may approach zero or infinity, and the coupling state detected by the external charging device may be abnormal.

It should be understood that in other embodiments, the predetermined temperature range may be other values, and the predetermined resistance range corresponding to the predetermined temperature range may be other values, which may not be specifically enumerated in the present disclosure herein.

In the foregoing embodiments, setting the predetermined resistance range based on a normal operating temperature range of the powered interface 311 and deriving the coupling state between the powered interface 311 and the external charging device based on the predetermined resistance range can enable the external charging device to monitor the temperature of the powered interface 311 timely, grasp the abnormal situation, and react in time, thereby improving the operating safety of the interface circuit 310.

In some embodiments, as shown in FIG. 29, the powered interface 311 may include a power supply pin A4(B4), and the power supply pin A4(B4) may be used to receive a charging voltage output from the external charging device when the interface circuit 310 is coupled to the external charging device. The external charging device stops outputting the charging voltage to the power supply pin A4(B4) when the coupling state is detected as abnormal.

In some embodiments, the power supply pin A4(B4) may be a VBUS pin, which may be connected to the output voltage pin of the external charging device when the external charging device is coupled to the powered interface 311, which allows the power supply pin A4(B4) to receive the charging voltage output by the external charging device, thereby enabling the external charging device to charge the electronic device 300 via the power supply pin A4(B4).

Specifically, when the external charging device detects that the coupling state is abnormal, it indicates that the temperature of the powered interface 311 exceeds the predetermined temperature range, i.e., the temperature of the powered interface 311 is too hot or too cold, at which time the external charging device stops outputting a charging voltage to the power supply pin A4(B4), thereby protecting the powered interface 311 and avoiding a safety accident as much as possible.

In some embodiments, as shown in FIG. 29, a count of the identification pins A5(B5) may be two, and a count of the predetermined thermistors 312 may also be two, with the two identification pins A5(B5) and the two predetermined thermistors 312 corresponding one to one.

Setting two identification pins A5(B5) can enhance the functions of power supply and communication between the powered interface 311 and the external charging device, and setting two predetermined thermistors 312 can double detect the temperature of the powered interface 311, thereby making the detection of the temperature of the powered interface 311 by the external charging device more accurate.

In some embodiments, a count of the power supply pins A4(B4) may also be two, including a first power supply pin A4(B4) and a second power supply pin A4(B4), as shown in FIG. 29.

In some embodiments, the powered interface 311 may also include a ground pin, a receive pin, a transmit pin, a freely pluggable pin, and an auxiliary pin as shown in FIG. 29.

The ground pin is used to connect a ground wire. For example, the ground pin may be a GND pin. Optionally, a count of the ground pins may be four, including a first ground pin A1, a second ground pin A12, a third ground pin B1, and a fourth ground pin B12.

The transmit pin may include a positive transmit pin and a negative transmit pin. A count of both the positive transmit pins and the negative transmit pins may also be set to two. The positive transmit pin may include a first positive transmit pin A2 and a second positive transmit pin B2, and the negative transmit pin may include a first negative transmit pin A3 and a second negative transmit pin B3. The transmit pin is configured to transmit data at high speed. The transmit pin is configured to send transmitted data at high speed to an external device after the external device is inserted and coupled to the powered interface 311.

The receive pin may include a positive receive pin and a negative receive pin. A count of both the positive receive pins and the negative receive pins may also be set to two. The positive receive pin includes a first positive receive pin A10 and a second positive receive pin B10, and the negative receive pin includes a first negative receive pin A11 and a second negative receive pin B11. After the external device is inserted and coupled to the powered interface 311, the receive pin is configured to receive data transmitted by the external device at a high speed.

The freely pluggable pin may also include a positive freely pluggable pin and a negative freely pluggable pin. For example, the positive freely pluggable pin is a D+ pin, and the negative freely pluggable pin is a D- pin. A count of both the positive freely pluggable pins and the negative freely pluggable pins may also be set to two, with the positive freely pluggable pin including a first positive freely pluggable A6 and a second positive any-connect pin B6, and the negative freely pluggable pin including a first negative freely pluggable pin A7 and a second negative freely pluggable pin B6. The freely pluggable pin is configured to transmit two sets of signals of USB 2.0. The positive freely pluggable pin and the negative freely pluggable pin are cross-connected, so it can make the data connection when the external device is accessed in any direction.

The auxiliary pin is used to assist in transmitting auxiliary signals between the powered interface 311 and the external charging device in some special modes. The auxiliary pin may be an SBU pin. A count of the auxiliary pins may be two, including a first auxiliary pin A8 and a second auxiliary pin B8.

The above descriptions are merely part of the embodiments of the present disclosure and should not be construed as limiting the scope of protection. Any equivalent devices or equivalent process modifications made based on the contents of the present disclosure and the accompanying drawings, or any direct or indirect applications in other related technical fields, shall fall within the scope of patent protection of the present disclosure.

## Claims

1. An earphone, comprising:
a core module; and
an ear hook, provided in a curved shape and including a first end and a second end away from the first end, the first end being connected to the core module, the ear hook being configured to hang on an ear of a user, the ear hook including an elastic frame and a covering member, the elastic frame extending along an extension direction of the ear hook, the covering member covering on the elastic frame, and the covering member being provided with a buffer cavity.

2. The earphone of claim 1, wherein
between the first end and the second end, the buffer cavity is closer to the second end.

3. The earphone of claim 2, wherein
the covering member includes a rear covering segment disposed on a rear side of the ear in a wearing state of the earphone,
the second end is located at the rear covering segment, and
the buffer cavity is opened in the rear covering segment.

4. The earphone of claim 3, wherein
the core module includes a connection end connected to the first end of the ear hook and a free end away from the connection end,
at least a portion of the rear covering segment is disposed opposite the free end, and
at least a portion of the buffer cavity is located at the portion of the rear covering segment opposite the free end.

5. The earphone of claim 4, wherein
the free end is disposed to extend into a concha cavity of the ear in the wearing state of the earphone,
the free end and the rear covering segment jointly clamp an ear region corresponding to the concha cavity from a front side and a rear side of the ear region in the wearing state of the earphone, and
the buffer cavity is located at a portion of the rear covering segment for clamping the ear region.

6. The earphone of claim 5, wherein
the core module has a length direction, a width direction, and a thickness direction that are perpendicular to each other,
the core module is configured to be stacked on the ear along the thickness direction in the wearing state of the earphone, and
an orthographic projection of the buffer cavity on a reference plane perpendicular to the length direction partially overlaps with an orthographic projection of the free end on the reference plane.

7. The earphone of claim 2, wherein
the core module has a length direction, a width direction, and a thickness direction that are perpendicular to each other,
the core module is configured to be stacked on the ear along the thickness direction in the wearing state of the earphone,
in the wearing state of the earphone, the core module includes an inner side surface facing the ear along the thickness direction and an outer side surface back away from the ear along the thickness direction, and an upper side surface and a lower side surface connecting the inner side surface and the outer side surface,
the upper side surface faces the ear hook,
the upper side surface and the lower side surface are spaced apart along the width direction, the covering member is divided into a front covering segment and a rear covering segment by an extension plane of the upper side surface,
the first end is located at the front covering segment,
the second end is located at the rear covering segment, and
the buffer cavity is opened in the rear covering segment.

8. The earphone of claim 6 or claim 7, wherein
a dimension of the buffer cavity along the width direction is greater than a dimension of the core module along the width direction.

9. The earphone of claim 1, wherein
the covering member includes a front covering segment and a rear covering segment,
the front covering segment covers on the elastic frame,
the front covering segment and the rear covering segment are connected along the extension direction,
the rear covering segment does not cover on the elastic frame, and
the buffer cavity is formed in the rear covering segment.

10. The earphone of claim 9, wherein the ear hook includes a fixing block, wherein
the fixing block is fixedly disposed at one end of the elastic frame close to the second end,
the front covering segment covers on the fixing block, and
an extension length of the rear covering segment along the extension direction is greater than an extension length of the fixing block along the extension direction.

11. The earphone of claim 10, wherein
a ratio of the extension length of the rear covering segment along the extension direction to an extension length of the front covering segment along the extension direction is greater than or equal to one-fifth and less than or equal to one-half.

12. The earphone of claim 11, wherein
the extension length of the front covering segment along the extension direction is in a range of 50 mm to 70 mm, and
the extension length of the rear covering segment is in a range of 10 mm to 30 mm.

13. The earphone of claim 10, wherein
the ear hook further includes a connector, the connector is fixedly disposed at one end of the elastic frame close to the first end, and the connector is inserted into and fixed with the core module.

14. The earphone of claim 1, wherein
the ear hook includes a fixing block,
the fixing block is disposed at one end of the elastic frame close to the second end,
the covering member covers on the fixing block, and
the fixing block is disposed on one side of the buffer cavity away from the core module.

15. The earphone of claim 14, wherein
the fixing block is located between two ends of the buffer cavity along the extension direction of the ear hook and closer to one end of the buffer cavity that is close to the second end.

16. The earphone of claim 1, wherein
the buffer cavity is provided in a closed configuration and formed inside the covering member; or,
the buffer cavity is configured as a hole or groove.

17. The earphone of claim 1, wherein
the core module has a length direction, a width direction, and a thickness direction that are perpendicular to each other,
the core module is configured to be stacked on the ear along the thickness direction in the wearing state of the earphone, and
the buffer cavity is configured as a hole and penetrates through the covering member along the thickness direction.

18. The earphone of claim 17, wherein
the buffer cavity is configured as an elongated and curved through-hole, and
a curved direction of the buffer cavity matches a curved direction of a portion of the covering member opened with the buffer cavity.

19. The earphone of claim 1, wherein
there are at least two buffer cavities, and the at least two buffer cavities are spaced apart along the extension direction; and/or,
the ear hook further includes a filler member, a hardness of the filler member is less than a hardness of the covering member, and the filler member is disposed within the buffer cavity; and/or,
the covering member includes an inner side surface facing the core module and an outer side surface back away from the inner side surface, and the inner side surface is disposed closer to the buffer cavity compared to the outer side surface.

20. The earphone of claim 1, wherein
the elastic frame includes a preset radial direction perpendicular to an extension direction of the elastic frame and passing through the buffer cavity; and
the buffer cavity is spaced from the elastic frame along the preset radial direction.

21. The earphone of claim 20, wherein
the buffer cavity is closer to the core module along the preset radial direction compared to the elastic frame, such that the buffer cavity is closer to the ear in a wearing state of the earphone.

22. The earphone of claim 21, wherein
the covering member includes a first covering portion and a second covering portion disposed on two sides of the buffer cavity along the preset radial direction;
the first covering portion and the second covering portion are spaced apart to form the buffer cavity,
the first covering portion is closer to the core module compared to the second covering portion to be configured to contact the ear, and
the elastic frame penetrates through the second covering portion.

23. The earphone of claim 20, wherein
the elastic frame extends from the first end to the second end.

24. The earphone of claim 23, wherein the ear hook includes a fixing block, wherein
the fixing block is fixedly disposed at one end of the elastic frame close to the second end,
the fixing block bends and extends from the elastic frame toward the buffer cavity, and continues to bend and extend to above the buffer cavity along an extension direction of the ear hook from the first end to the second end.

25. The earphone of claim 24, wherein
an end of the elastic frame close to the second end is inserted within the fixing block, and
a circumferential dimension of one end of the fixing block away from the elastic frame is greater than a circumferential dimension of one end of the fixing block inserted with the elastic frame.

26. The earphone of claim 25, wherein
the ear hook is opened with a first positioning hole,
the fixing block is opened with a second positioning hole,
the second positioning hole is located at the end of the fixing block away from the elastic frame, and
the first positioning hole and the second positioning hole are disposed opposite to each other.

27. The earphone of claim 1, wherein
the ear hook includes a connector, one end of the elastic frame close to the first end is inserted into the connector, and an extension direction of an end of the elastic frame close to the first end and an extension direction of the connector intersect with each other.

28. The earphone of claim 27, wherein
the core module has a length direction, a width direction, and a thickness direction that are perpendicular to each other,
the core module is configured to be stacked on the ear along the thickness direction in a wearing state of the earphone,
there is a first angle facing the ear hook between the extension direction of the end of the elastic frame close to the first end and the length direction,
there is a second angle facing the ear hook between the extension direction of the connector and the length direction, and
the first angle is smaller than the second angle.

29. The earphone of claim 28, wherein
the first angle is in a range of 70° to 110°, and the second angle is in a range of 90° to 130°.
